(19) **Europäisches Patentamt / European Patent Office / Office européen des brevets**

(11) **EP 4 057 567 A1**

(12) **EUROPEAN PATENT APPLICATION**

(43) Date of publication:
**14.09.2022 Bulletin 2022/37**

(21) Application number: **21161346.8**

(22) Date of filing: **08.03.2021**

(51) International Patent Classification (IPC):
**H04L 9/32** (2006.01)   **G06F 21/64** (2013.01)
**G06Q 20/38** (2012.01)

(52) Cooperative Patent Classification (CPC):
**H04L 9/3239; G06F 21/64; G06F 21/645; G06Q 20/389; H04L 9/50**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Fletcher, John**
**Cambrigde CB4 1 UF (GB)**

(72) Inventor: **Fletcher, John**
**Cambrigde CB4 1 UF (GB)**

(74) Representative: **Gray, Peter John Bracey**
**Mathys & Squire**
**The Shard**
**32 London Bridge Street**
**London SE1 9SG (GB)**

(54) **IMPROVED BLOCKCHAIN RELYING ON ADVANCED CONSENSUS MECHANISM**

(57)   The invention relates to a blockchain 10 dependent on a plurality of proof of work problems. The invention also relates to a computer-implemented method of outputting a transmission to a second node 3004 of a blockchain 10, the method being performed by a first node 3002 of the blockchain 10, the method comprising: identifying a first proof of work problem relating to the blockchain; identifying a second proof of work problem relating to the blockchain; identifying a solution, the solution relating to the first proof of work problem and/or the second proof of work problem; identifying, based on the solution: the influence of a further node 3006 on a consensus mechanism of the blockchain; and/or a reward for the further node 3006; and outputting a transmission to the second node 3004 of the blockchain in dependence on the influence and/or the reward.

110

Identify a first proof of work solution — 111

Identify a second proof of work solution — 112

Determine a parameter relating to the influence of a node on a consensus mechanism based on the first proof of work solution and the second proof of work solution — 113

Figure 5

EP 4 057 567 A1

**Description**

Field of invention

The present invention relates to a computer-implemented method, in particular a method of outputting a transmission to a node of a blockchain. The invention further relates to a method of configuring a blockchain and an apparatus and system for accessing and/or viewing the blockchain.

Background

A blockchain is an electronic ledger on which data can be stored. Specifically, a blockchain comprises a plurality of blocks, with each block containing its own list of one or more records. Each block also contains a reference to (e.g. a cryptographic hash of) the previous block so that there exists an unbroken link running through the entirety of the blockchain, with each block referring to the preceding block. Modifying any of the constituent blocks of the blockchain affects the cryptographic hash, so that any modification of a past block is immediately apparent.

Each block of the blockchain comprises a number of records, where each block typically comprises transactions between entities on the blockchain. In order for a transaction to be included in a block and added to the blockchain this transaction must be verified. Verification comprises checking that the transaction meets certain requirements. As an example, in typical implementations of blockchains an amount of a digital asset is locked based on a public key; in order to unlock and spend this digital asset an entity must provide proof that they hold a corresponding private key. The testing of this proof forms a part of the verification process, where a transaction relating to the locked digital asset will not be verified until the requisite proof is provided. Once the transaction has been verified it can be included in a block which is proposed, e.g. by a miner, for addition to the blockchain. This block can then be propagated throughout the system where it is validated (e.g. the validity of the transactions and the mining process is confirmed) by further nodes.

When a party wishes to add a block to the blockchain, a consensus mechanism is typically used to build a consensus on the history of the blockchain. The consensus mechanism may comprise a dynamic membership multi-signature (DMMS) that is recorded on the blockchain. In a proof of work blockchain, such as Bitcoin, the DMMS typically comprises signatures of computational power (SoCPs); in a proof of stake blockchain, such as Algorand, the DMMS typically comprises signatures of knowledge (SoKs).

Signatures of computational power typically comprise evidence that a user is devoting a certain amount of computing power to a network; this may be demonstrated by the user submitting solutions to a cryptographic problem.

Signatures of knowledge typically comprise evidence that a user controls an amount of an asset on a network (e.g. a certain amount of a cryptocurrency relating to a blockchain). The signatures may comprise a number of blockchain addresses. Typically, the signatures of knowledge evidence knowledge of a private key that corresponds to a public key, which public key controls an amount of an asset relating to the blockchain.

Signatures of computational power and signatures of knowledge are further described in "Back et. Al Enabling Blockchain Innovations with Pegged Sidechains. 2014; https://blockstream.com/sidechains.pdf".

The DMMS typically relates to each party that is involved in the addition of a block to the blockchain, e.g. in Bitcoin the DMMS relates to the miners of Bitcoin and in Algorand the DMMS relates to the holders of a deposit.

In order to add a block to the blockchain, the stakeholders must reach consensus on an appropriate block. Problematically, if consensus were to be reached based on a simple majority vote between contributors, the blockchain would be open to a sybil attack, where a malicious actor could run multiple nodes on the blockchain and thereby outvote the other, legitimate, nodes.

In orderto hindersuch sybil attacks, blockchains typically comprise an anti-sybil mechanism and/or a sybil-defence factor. This sybil-defence factor controls the influence that a party has on the consensus mechanism and thereby prevents a malicious actor taking control of the network by running multiple nodes. Examples of anti-sybil mechanisms include:

-    Proof of Work (PoW). With a proof of work sybil-defence mechanism, the degree of influence that a node has on the consensus mechanism is dependent on an amount of computational work performed by that node.
    Typically, the computational work performed by each node is determined by requiring nodes of the blockchain to solve cryptographic problems, where a node finding a solution for (puzzles for) the problems indicates that this node has performed a certain amount of computational work. Exemplary cryptographic problems include: finding a solution that results in a certain hash (e.g. finding a nonce that can be hashed with a block to give a hash with a certain number of leading zeros); and finding a solution for a verifiable delay function.
    This sybil-defence factor prevents a party from increasing their influence by splitting their computing power over multiple nodes,
    An exemplary blockchain that uses a proof of work sybil-defence factor is Bitcoin, which is described in detail in "Satoshi Nakamoto. Bitcoin: A peer-to-peer electronic cash system. http://nakamotoinstitute.org/bitcoin/ (2008)".

- Proof of Stake (PoS). With a proof of stake sybil-defence mechanism, the degree of influence that a node has on the consensus mechanism is dependent on a deposit held by that party.

This sybil-defence factor hinders sybil attacks by requiring any attacker to hold a large stake in the blockchain (e.g. a malicious actor cannot increase their influence on the consensus mechanism by splitting a small stake over a large number of nodes).

An exemplary blockchain that uses a proof of stake system is Algorand, which is described in "Silvio Micali. Algorand: the efficient and democratic ledger. CoRR, abs/1607.01341, 2016".

Summary of the Disclosure

Aspects and embodiments of the present invention are set out in the appended claims. These and other aspects and embodiments of the invention are also described herein.

According to an aspect of the present invention, there is disclosed a blockchain dependent on a plurality of proof of work problems.

According to an aspect of the present invention, there is disclosed a computer-implemented method performed by a first node of the blockchain, the method comprising: identifying a first proof of work problem relating to the blockchain; identifying a second proof of work problem relating to the blockchain; identifying a solution, the solution relating to the first proof of work problem and/or the second proof of work problem; identifying, based on the solution: the influence of a further node on a consensus mechanism of the blockchain; and/or a reward for the further node; and outputting an output (e.g. a transmission) in dependence on the influence and/or the reward.

According to an aspect of the present invention, there is disclosed a computer-implemented method of outputting a transmission to a second node of a blockchain, the method being performed by a first node of the blockchain, the method comprising: identifying a first proof of work problem relating to the blockchain; identifying a second proof of work problem relating to the blockchain; identifying a solution, the solution relating to the first proof of work problem and/or the second proof of work problem; identifying, based on the solution: the influence of a further node on a consensus mechanism of the blockchain; and/or a reward for the further node; and outputting a transmission to the second node of the blockchain in dependence on the influence and/or the reward.

Preferably, identifying a solution comprises: determining a first factor relating to a computational power devoted by the further node to a first proof of work problem; and/or determining a second factor relating to a computational power devoted by the further node to a second proof of work problem.

Typically, each factor is associated with a portion of total computational power devoted by the further node to the corresponding problem, the total computational power being the sum of the computational power devoted to said problem by all of the nodes of the blockchain.

Preferably, identifying, based on the solution comprises: determining, based on the solution and/or the first factor and the second factor, a parameter relating to: the influence of the further node on a consensus mechanism of the blockchain; and/or a reward for the further node; and outputting a transmission to the second node of the blockchain in dependence on the parameter.

Preferably, the solution comprises one or more of: a solution to either of the first proof of work problem or the second proof of work problem; a solution to both of the first proof of work problem and the second proof of work problem; and a solution to a predetermined proof of work problem, preferably wherein the predetermined proof of work problem is based on an order of the proof of work problems.

Preferably, the solution comprises a plurality of solutions.

Preferably, determining the influence of the further node comprises determining and/or defining that the further node is a proposer, validator, and/or signer of a block of the blockchain.

Preferably, the method comprises: determining a first function based on a first subset of proof of work problems; determining a second function based on a second subset of proof of work problems; and determining the influence and/or the reward based on the first function and the second function.

Preferably, the parameter comprises a plurality of elements, wherein the elements of the parameter relate to one or more of: a component of the influence; and/or the reward. Preferably, each of the elements relates to a different one of the components and/or the reward.

According to an aspect of the present invention, there is disclosed a computer-implemented method of outputting a transmission to a second node of a blockchain, the method being performed by a first node of the blockchain, the method comprising: determining a first factor relating to a computational power devoted by a further node to a first proof of work problem; determining a second factor relating to a computational power devoted by the further node to a second proof of work problem; determining, based on the first factor and the second factor, a parameter relating to: the influence of the further node on a consensus mechanism of the blockchain; and/or a reward for the further node; and outputting a transmission to the second node of the blockchain in dependence on the parameter.

Preferably, the parameter relates to a number of signatures of computational power held by the further node.

Preferably, the first factor and the second factor relate to different components of the influence. Preferably, the influence of the further node on a consensus mechanism of the blockchain is dependent on the first factor; and/or the reward for the further node is dependent on the second factor. Preferably, the influence of the further node on a consensus mechanism of the blockchain is not dependent on the second factor.

Preferably, the first factor and the second factor relate to one or more of: a minimum number of solutions provided by the further node for one of the proof of work problems; an average number of solutions provided by the further node for one of the proof of work problems; a maximum number of solutions provided by the further node for one of the proof of work problems; and a number of solutions provided by the further node for one of the proof of work problems being greater than a threshold number.

Preferably, the first factor and the second factor relate to one or more of: a minimum computational power devoted by the further node to one of the proof of work problems; an average computational power devoted by the further node to one of the proof of work problems; a maximum computational power devoted by the further node to one of the proof of work problems; and a computational power devoted by the further node for one of the proof of work problems being greater than a threshold value.

Preferably, the influence of the further node is dependent on at least one non-proof-of-work sybil-defence factor.

Preferably, the influence and/or the reward is dependent on a further factor, the further factor depending on one or more of: the activity of the further node on a further blockchain; a number of blocks of a further blockchain for which the further node has participated in the addition of said blocks to said further blockchain; a deposit relating to the further node and relating to the blockchain; a deposit relating to the further node and relating to a/the further blockchain; a further anti-sybil factor relating to the further node and relating to the blockchain; and a further anti-sybil factor relating to the further node and relating to the further blockchain.

Preferably, the influence and/or the reward and/or a/the parameter for a node is dependent on one or more of: a minimum factor; an average factor; a distribution of factors; a variance of factors; and a parity between factors. Preferably, the method comprises determining a penalty relating to the node exceeding a threshold factor disparity.

Preferably, the first proof of work problem and/or the second proof of work problem comprises one or more of: an NP problem; an NP-hard problem; an NP-complete problem; an asymmetric problem; an inverse problem; a quantum resistant problem; a problem dependent on human input; a progress-free problem; a non-progress-free problem; a sequential problem; a verifiable delay function (VDF); an optimisable problem in hardware and/or software; and a non-optimisable and/or optimisation-resistant problem in hardware and/or software.

Preferably, at least one of the proof of work problems comprises a progress-free and/or non-optimisable problem. Preferably, the influence of the further node on the consensus mechanism is dependent on said proof of work problem.

Preferably, at least one of the proof of work problems comprises a non-progress-free and/or optimisable problem. Preferably, the influence of the further node on the consensus mechanism is not dependent on said proof of work problem.

Preferably, the first proof of work problem and the second proof of work problem comprise different types of problem.

Preferably, the first proof of work problem and/or the second proof of work problem is adjustable to: target a desired solution time; and/or target a desired time interval between the addition of blocks to the blockchain; and/or target a desired rate of drain of reward.

Preferably, the method comprises determining a threshold value relating to one or more of: a maximum permitted value of the first factor and/or the second factor; a maximum permitted increase in the first factor and/or the second factor over a unit of time and/or a block of the blockchain; and a maximum permitted non-parity and/or disparity between the first factor and the second factor.

Preferably, the threshold value is dependent on one or more of: a hardcoded value; a popular vote by the nodes of the blockchain; a computational cost associated with the first factor and/or the second factor; a transaction recorded on the blockchain; and an external input, preferably a bid from an external party.

Preferably, exceeding the threshold value is associated with a penalty. Preferably, the penalty relates to a redistribution, optionally a proportional redistribution, of an amount of the first factor and/or the second factor to other nodes of the blockchain.

Preferably, the penalty is dependent on one or more of: a magnitude of a disparity between the first factor and the second factor, more preferably wherein the penalty increases with the magnitude, yet more preferably wherein the penalty increases exponentially and/or in a stepped manner; a cost related to the node altering the first factor and/or the second factor; and the factors of other nodes.

Preferably, the method comprises determining a plurality of factors relating to the computational power devoted by the further node to a plurality of proof of work problems, wherein the influence and/or the reward is dependent on each of the proof of work problems. Preferably, the method comprises determining at least twenty factors, more preferably at least fifty factors, yet more preferably at least one hundred factors.

Preferably, the method comprises identifying an algorithm used by the further node to determine the solution.

Preferably, identifying the algorithm comprises one or more of: identifying a record on the blockchain; identifying a record on a smart contract; identifying an intermediate solution; and identifying a licence fee relating to the use of the algorithm. Preferably, the licence fee relates to and/or is payable for one or more of: an algorithm with a certain usage among nodes; an algorithm that is on a list of licensable algorithms; and an algorithm that has passed a vote by the nodes.

Preferably, the method comprises determining one or more puzzles to be assigned to the further node for one of the first problem and the second problem.

Preferably, the puzzles are valid for a limited time.

Preferably, the number of puzzles is dependent on solutions previously submitted by the further node.

Preferably, the number of puzzles is dependent on a number solutions previously submitted by the further node.

Preferably, the number of puzzles is proportional to a previously solved number of puzzles for the further node.

Preferably, the number of puzzles assigned for the first problem is dependent on a previous factor for the further node for the second problem. Preferably, the number of puzzles assigned for the first problem is selected so as to limit a possible disparity between the first and second problems.

Preferably, the difficulty of the puzzles is dependent on solutions previously submitted by the further node.

Preferably, the method comprises identifying a new proof of work problem; and outputting the new proof of work problem to the second node

Preferably, the method comprises identifying a previously optimisable proof of work problem that has become non-optimisable.

Preferably, the method comprises identifying a new optimisation for one of the proof of work problems.

Preferably, the method comprises identifying a defunct proof of work problem; and indicating the defunct proof of work problem to the second node.

Preferably, the method comprises determining a number of different proof of work problems on which a previous number of blocks depend. Preferably, the method comprises determining that a previous number of blocks are dependent on a number of different work problems that exceeds a threshold number.

Preferably, the method comprises determining another node that has provided an optimisation for the first proof of work problem and/or the second proof of work problem.

Preferably, the method comprises determining an optimisation reward for the other node. Preferably, the optimisation reward is dependent on the optimisation; and/or the optimisation reward is related to the blockchain; and/or the optimisation reward comprises an optimisation factor, wherein the parameter is determined based on the optimisation factor; and/or the optimisation and/or the optimisation reward is determined based on a smart contract, preferably a smart contract recorded on the blockchain.

Preferably, the eligibility of the further node to participate in the addition of a block to the blockchain is dependent on the first factor and/or a solution to the first proof of work problem.

Preferably, the reward for the further node is dependent on the second factor.

Preferably, the influence relates to the eligibility of the further node to participate in the building of a consensus and/or the addition of a block to the blockchain

Preferably, the method comprises determining, based on the solution, one or more nodes that are eligible to participate in the building of a consensus and/or the addition of a block.

Preferably, determining, based on the solution, comprises one or more of: determining an eligibility for the further node to be selected to participate in the addition of a block to the blockchain; determining a probability of selection for the further node to participate in the addition of a block to the blockchain; and determining a maximum degree of active participation of the further node in the addition of a block to the blockchain.

Preferably, the reward relates to the addition of a block to the blockchain. Preferably, determining, based on the solution, comprises determining a reward for the further node, the reward relating to the addition of a block to the blockchain.

Preferably, the solution relates to a probability of the further node being selected as a participant in the addition of a block. Preferably, determining, based on the solution, comprises determining a probability of the further node being selected as a participant in the addition of a block. Preferably, the solution relates to a degree of eligibility for the further node to be selected to participate in the addition of the block. Preferably, determining, based on the solution, comprises determining a degree of eligibility for the further node to be selected to participate in the addition of the block. Preferably, the solution relates to a maximum degree of active participation of the further node in the addition of the block. Preferably, determining, based on the solution, comprises determining a maximum degree of active participation of the further node in the addition of the block.

Preferably, the solution relates to a weighting for a contribution to the building of consensus for the further node. Preferably, determining, based on the solution, comprises determining a weighting for a contribution to the building of consensus for the further node.

Preferably, the weighting comprises a weighting for a representation of the further node in a dynamic-membership multi-signature (DMMS).

Preferably, the method comprises determining a reward for one or more nodes eligible to be selected to participate in the building of a consensus and/or the addition of a block. Preferably, the method comprises determining a reward for each of the eligible nodes. Preferably, each eligible node receives a reward.

Preferably, the method comprises selecting the further node as a participant in the addition of the block to the blockchain. Preferably, the method comprises selecting the further node as a proposer and/or validator of the block.

Preferably, the further node comprises the second node and/or a wherein the further node comprises a third node of the blockchain.

Preferably, the block is a future block of the blockchain, preferably the next block of the blockchain.

Preferably, outputting a transmission comprises indicating the further node as being an eligible participant in the addition of a block to the blockchain. Preferably, outputting a transmission comprises indicating a reward for the further node, the reward relating to the addition of a block to the blockchain.

Preferably outputting a transmission comprises one or more of: adding a block to the blockchain; transmitting a message and/or an alarm to one or more nodes of the blockchain; validating and/or signing a block of the blockchain; and transmitting a block of the blockchain to one or more nodes of the blockchain.

Preferably, the method further comprises proposing a block for addition to the blockchain based on the solution. Preferably, the block comprises information relating to the solution and/or the block comprises the solution; and/or the block comprises information relating to the further node and/or the block determines the further node.

Preferably, determining the computational power devoted to the first proof of work problem and/or the second proof of work problem comprises one or more of: the identification of one or more solutions and/or proofs for a cryptographic problem, preferably wherein the solutions and/or proofs are valid for a predetermined period of time and/or a predetermined number of blocks; the determination of a difficulty of the solution(s) and/or proof(s); the identification of shares held by the further node relating to the solution of a cryptographic problem; the identification of a share verification contract (SVC); the determination of a hash rate of the further node; and the determination of the number of previous blocks proposed by the further node.

Preferably, the solution relates to one or more of: an average number of solutions in a given time, preferably a moving average; a minimum number of solutions in a given time; an average devoted computational power devoted to one or more of the proof of work problems, preferably a moving average; an instantaneous devoted computational power; a current devoted computational power; and a historic devoted computational power.

Preferably, the influence and/or the reward is dependent on a deposit held by the further node in relation to the blockchain. Preferably, the deposit relates to an amount of an asset relating to the blockchain.

Preferably, the method comprises determining one or more nodes that are eligible to participate in the addition of a block to the blockchain. Preferably, eligibility is dependent on one or more of: holding a deposit in relation to the blockchain, preferably holding a deposit greater than a threshold deposit; and devoting a computational power to the blockchain, preferably devoting a computational power greater than a threshold computational power.

Preferably, the first proof of work problem and/or the second proof of work problem comprises a proof of work problem for a further blockchain and/or a proof of work problem associated with a further blockchain.

Preferably, the influence and/or the reward is dependent on a certificate held by the further node. Preferably, the certificate: is associated with the computational power devoted to the first problem and/or the second problem by a different node; and/or is associated with a deposit held by a/the different node, the deposit relating to the blockchain; and/or is transferable; and/or has a finite lifespan, more preferably wherein the certificate is valid for a finite number of blocks.

According to another aspect of the present disclosure, there is described an apparatus arranged to store, access, and/or view the blockchain of any preceding claim. Preferably, the apparatus comprises one or more of: a computer implemented device; a display and/or a speaker; and a user input.

Preferably, the apparatus is arranged to present information relating to the blockchain in dependence on a user request and/or an event.

According to an aspect of the present disclosure, there is described a computer-implemented method of outputting a transmission to a second node of a blockchain, the method being performed by a first node of the blockchain, the method comprising: determining a first factor relating to a computational power devoted by a further node to a first proof of work problem; determining a second factor relating to a computational power devoted by the further node to a second proof of work problem; determining, based on the determined computational power, a parameter relating to: the influence of the further node on a consensus mechanism of the blockchain; and/or a reward for the further node; and outputting a transmission to the second node of the blockchain in dependence on the parameter.

Preferably, the eligibility of the further node to participate in the addition of a block to the blockchain is dependent on the first factor and/or a solution to the first proof of work problem.

Preferably, the reward for the further node is dependent on the second factor.

Preferably, the parameter relates to the eligibility of the further node to participate in the building of a consensus and/or the addition of a block. Preferably, determining a parameter comprises determining one or more nodes that are eligible to participate in the building of a consensus and/or the addition of a block.

Preferably, determining the parameter comprises determining an eligibility to be selected to participate of the further node in the addition of a block to the blockchain. Preferably, determining the parameter comprises determining a probability of selection to participate of the further node in the addition of a block to the blockchain. Preferably, determining the parameter comprises determining a maximum degree of active participation of the further node in the addition of a block to the blockchain.

Preferably, the parameter relates to a reward for the further node, the reward relating to the addition of the block to the blockchain. Preferably, determining a parameter comprises determining a reward for the further node, the reward relating to the addition of the block to the blockchain.

Preferably, the parameter relates to a probability of the further node being selected as a participant in the addition of a block. Preferably, determining a parameter comprises determining a probability of the further node being selected as a participant in the addition of a block.

Preferably, the method comprises designating and/or selecting the further node as a participant in the addition of the block to the blockchain, preferably designating and/or selecting the further node as a proposer and/or validator of the block.

Preferably, the further node comprises the second node and/or the further node comprises a third node of the blockchain.

Preferably, the block is a future block of the blockchain. Preferably, the block is the next block of the blockchain.

Preferably, outputting a transmission comprises indicating the further node as being an eligible participant in the addition of a block to the blockchain.

Preferably, outputting a transmission comprises indicating a reward for the further node, the reward relating to the addition of a block to the blockchain.

Preferably, outputting a transmission comprises one or more of: adding a block to the blockchain; transmitting a message to one or more nodes of the blockchain; validating and/or signing a block of the blockchain; and transmitting a block of the blockchain to one or more nodes of the blockchain.

Preferably, the method comprises proposing a block for addition to the blockchain based on the parameter. Preferably, the block comprises information relating to the parameter and/or the block comprises the parameter. Preferably, the block comprises information relating to the further node and/or the block determines the further node.

Preferably, the devoted computational power relates to one or more of: an average devoted computational power, preferably a moving average; an instantaneous computational power; a current computational power; and a historic computational power.

Preferably, the method comprises determining a threshold value relating to one or more of: a maximum value of the first factor and/or the second factor; a maximum increase in the first factor and/or the second factor over a unit of time. Preferably, the threshold value is dependent on a popular vote by the nodes of the blockchain.

Preferably, the method comprises determining factors relating to a plurality of proof of work problems, preferably at least twenty proof of work problems, more preferably at least fifty proof of work problems, yet more preferably at least one hundred proof of work problems.

Preferably, the method comprises determining another node that has provided an optimisation for the first proof of work problem and/or the second proof of work problem, preferably further comprising determining an optimisation further reward for the other node, more preferably determining the optimisation reward in dependence on the optimisation.

Preferably, the optimisation reward is related to the blockchain.

Preferably, the optimisation reward comprises an optimisation factor, wherein the parameter is determined based on the optimisation factor.

Preferably, the parameter is dependent on a deposit held by the further node in relation to the blockchain. Preferably, the deposit relates to an amount of an asset relating to the blockchain.

Preferably, the method comprises determining one or more nodes that are eligible to participate in the addition of a block to the blockchain.

Preferably, eligibility is dependent on one or more of: holding a deposit in relation to the blockchain, preferably holding a deposit greater than a threshold deposit; and devoting a computational power to the blockchain, preferably devoting a computational power greater than a threshold computational power. Preferably, a reward for the addition of a block to the blockchain is dependent on one or more of: the determined parameter; a deposit held by the further node in relation to the blockchain; a deposit held by other nodes in relation to the blockchain; the computational power devoted by the further node to the blockchain; and the computational power devoted by other nodes to the blockchain.

Preferably, the representations of the further node in a dynamic membership multi-signature are dependent on the computational power devoted by that further node.

Preferably, the parameter is dependent on a factor relating to a deposit held by the further node in relation to the blockchain. Preferably, the parameter is maximised when a value relating to the factors is equal. Preferably, the parameter is dependent on a minimum value of the factors. Preferably, the parameter is dependent on a linear function relating to the factors. Preferably, the parameter is dependent on the proportion of a factor held by the further node as compared to the proportion of this factor held by other nodes to the blockchain.

Preferably, the parameter is dependent on a certificate held by the further node. Preferably, the certificate is associated with the computational power devoted to the first proof of work problem and/or the second proof of work problem by a different node. Preferably, the certificate is associated with a deposit held by a/the different node, the deposit relating to the blockchain. Preferably, the certificate is transferable. Preferably, the certificate has a finite lifespan. Preferably, the certificate is valid for a finite number of blocks.

Preferably, the parameter is dependent on the activity of the further node on a further blockchain.

Preferably, the first proof of work problem and/or the second proof of work problem relates to a further blockchain.

Preferably, the activity relates to the participation of the further node in the addition of blocks to the further blockchain. Preferably, the activity relates to a probability of the further node participating in the addition of a block to the further blockchain.

Preferably, the activity relates to a deposit held by the further node, the deposit relating to the further blockchain.

Preferably, a reward for participating in the addition of a block to the blockchain relates to the further blockchain. Preferably, the reward comprises an asset associated with the further blockchain.

Preferably, one or more transactions and/or blocks of the blockchain are recorded on the further blockchain. Preferably, the entirety of the blockchain is recorded on the further blockchain.

According to an aspect of the present disclosure, there is described an apparatus arranged to store, access, and/or view the blockchain of any preceding claim. Preferably, the apparatus comprises a computer implemented device. Preferably, the apparatus comprises a display and/or a speaker. Preferably, the apparatus comprises a user input. Preferably, the apparatus is arranged to present information relating to the blockchain in dependence on a user request and/or an event.

Preferably, determining the computational power devoted by a node comprises determining a contribution of the node to a proof of work sybil-defence factor.

Preferably, outputting a transmission comprises one or more of: adding a block to the blockchain in dependence on the parameter; transmitting a message to one or more nodes of the blockchain; validating and/or signing a block of the blockchain; and transmitting a block of the blockchain to one or more nodes of the blockchain.

According to least one aspect of the present disclosure, there is described a computer-implemented method of configuring a blockchain, such that a first node of the blockchain is arranged to and/or required to: identify a first proof of work problem relating to the blockchain; identify a second proof of work problem relating to the blockchain; identify a solution, the solution relating to the first proof of work problem and/or the second proof of work problem; identify, based on the solution: the influence of a further node on a consensus mechanism of the blockchain; and/or a reward for the further node; and output a transmission to the second node of the blockchain in dependence on the influence and/or the reward.

According to least one aspect of the present disclosure, there is described a computer-implemented method of configuring a blockchain so that upon a block being proposed for addition to the blockchain and/or validated by a first node, the first node: identifies a first proof of work problem relating to the blockchain; identifies a second proof of work problem relating to the blockchain; identifies a solution, the solution relating to the first proof of work problem and/or the second proof of work problem; identifies, based on the solution: the influence of a further node on a consensus mechanism of the blockchain; and/or a reward for the further node; and outputs a transmission to the second node of the blockchain in dependence on the influence and/or the reward.

According to least one aspect of the present disclosure, there is described a blockchain, wherein one or more of the blocks of the blockchain is dependent on a first factor and a second factor relating to the influence of the node on a consensus mechanism of the blockchain and/or participation of a node in the addition of a block to the blockchain, wherein the first factor and the second factor relate, respectively, to a first proof of work problem and a second proof of work problem.

According to least one aspect of the present disclosure, there is described an apparatus arranged to view, access, and/or store the aforesaid blockchain.

According to least one aspect of the present disclosure, there is described an apparatus for recording entries on a blockchain, wherein the apparatus is arranged to: identify a first proof of work problem relating to the blockchain; identify a second proof of work problem relating to the blockchain; determining a solution, the solution relating to the first proof of work problem and/or the second proof of work problem; identify, based on the solution: the influence of a further node on a consensus mechanism of the blockchain; and/or a reward for the further node; and output a transmission to the second node of the blockchain in dependence on the influence and/or the reward.

According to least one aspect of the present disclosure, there is described a computer-implemented method of outputting a transmission to a second node of a public consensus network, the method being performed by a second node of the public consensus network, the method comprising: identifying a first proof of work problem relating to the public consensus network; identifying a second proof of work problem relating to the public consensus network; identifying a solution, the solution relating to the first proof of work problem and/or the second proof of work problem; identifying, based on the solution: the influence of a further node on a consensus mechanism of the public consensus network; and/or a reward for the further node; and outputting a transmission to the second node of the public consensus network in dependence on the influence and/or the reward.

It will be appreciated that any method and/or feature disclosed with reference to a blockchain is, more generally, applicable to a public consensus network.

Preferably, the reward comprises a reward for proposing and/or validating the block.

Preferably, the reward is included as one or more transactions in the block.

Preferably, the parameter comprises a probability of the node being designated as a participant in the addition of a block to the blockchain.

Preferably, the solutions and/or proofs are valid for a predetermined period of time and/or a predetermined number of blocks.

Preferably, the computational power devoted relates to one or more of: an average devoted computational power, preferably a moving average; an instantaneous computational power; a current computational power; and a historic computational power.

Preferably, the parameter is dependent on a deposit held by the node in relation to the blockchain. Preferably, the deposit relates to an amount of an asset relating to the blockchain.

Preferably, eligibility is dependent on the or each node holding a deposit in relation to the blockchain. Preferably, the determination comprises determining that the or each node holds a deposit greater than a threshold deposit; and Preferably, eligibility is dependent on the or each node devoting a computational power to the first proof of work problem and/or the second proof of work problem. Preferably, the determination comprises determining that the or each node is devoting and/or as devoted greater than a threshold computational power.

Preferably, the parameter is dependent on one or more of: the historical activity of the node; whether the node has been involved in the addition of any invalid and/or orphaned blocks; a transaction within the block and/or a previous block; and the involvement of the node in a transaction within the block and/or a previous block.

Preferably, a reward for the addition of a block is awarded to both the proposer of the block and one or more validators of a block. Preferably, a reward for the addition of a block is awarded to each node eligible to participate in the addition of the block.

Preferably, the parameter is dependent on the proportion of a factor held by the node as compared to the proportion of this factor held by other node to the blockchain.

Preferably, the transmission comprises an indication that a threshold computational power relating to a block of the blockchain has not been exceeded and/or wherein the transmission comprises an indication that a threshold stake relating to a block of the blockchain has been exceeded.

Preferably, the parameter is dependent on the activity of the node on a further blockchain. The activity may, for example, relate to the participation of the node in the addition of blocks to the further blockchain; a computational power devoted to the further blockchain by the node; and/or a deposit held by the node in relation to the further blockchain.

Preferably, the parameter relates to a probability of the node participating in the addition of a block on the further blockchain.

Preferably, the method comprises recording on the further blockchain an entry relating to a transaction that has occurred on the blockchain.

Preferably, the further blockchain is arranged to automatically record one or more of the transactions recorded on the blockchain.

Preferably, the method further comprises recording on the blockchain an entry relating to a transaction that has occurred on the further blockchain.

Preferably, the blockchain and the further blockchain are associated with each other. Preferably, the security of the blockchain is dependent on the further blockchain.

Preferably, one or more transactions and/or blocks of the blockchain are recorded on the further blockchain. Preferably, the entirety of the blockchain is recorded on the further blockchain.

According to another aspect of the present disclosure, there is described a system comprising a plurality of apparatuses arranged to store, access, and/or view the aforesaid blockchain and/or the aforesaid public consensus network.

Preferably, each of the apparatuses are arranged to communicate with each other.

Preferably, each of the apparatuses are arranged to communicate so as to propagate blocks of the blockchain to the other apparatuses.

The invention extends to any novel aspects or features described and/or illustrated herein.

Further features of the disclosure are characterised by the other independent and dependent claims.

Any feature in one aspect of the disclosure may be applied to other aspects of the disclosure, in any appropriate combination. In particular, method aspects may be applied to apparatus aspects, and vice versa.

Furthermore, features implemented in hardware may be implemented in software, and vice versa. Any reference to software and hardware features herein should be construed accordingly.

Any apparatus feature as described herein may also be provided as a method feature, and vice versa. As used herein, means plus function features may be expressed alternatively in terms of their corresponding structure, such as a suitably programmed processor and associated memory.

It should also be appreciated that particular combinations of the various features described and defined in any aspects of the disclosure can be implemented and/or supplied and/or used independently.

The disclosure also provides a computer program and a computer program product comprising software code adapted, when executed on a data processing apparatus, to perform any of the methods described herein, including any or all of their component steps.

The disclosure also provides a computer program and a computer program product comprising software code which, when executed on a data processing apparatus, comprises any of the apparatus features described herein.

The disclosure also provides a computer program and a computer program product having an operating system which supports a computer program for carrying out any of the methods described herein and/or for embodying any of the apparatus features described herein.

The disclosure also provides a computer readable medium having stored thereon the computer program as aforesaid.

The disclosure also provides a signal carrying the computer program as aforesaid, and a method of transmitting such a signal.

The disclosure extends to methods and/or apparatus substantially as herein described with reference to the accompanying drawings.

Embodiments of the disclosure are described below, by way of example only, with reference to the accompanying drawings.

Brief Description of the Drawings

Figure 1 shows a blockchain on which the methods disclosed herein can be implemented.

Figure 2 illustrates a computer device on which aspects of the disclosed system are implemented.

Figure 3 shows a network on which aspects of the disclosed system are implemented.

Figure 4 shows a flowchart for a method of adding a block to a blockchain in dependence on a plurality of proof of work problems.

Figure 5 shows a flowchart for a method of determining a parameter relating to the influence of a node on a consensus mechanism of the blockchain.

Figure 6 shows a flowchart for a method of determining a reward for a node that has discovered an optimisation.

Figure 7 shows a flowchart for a method of determining a number of puzzles to be allocated to a node.

Figures 8a and 8b show exemplary methods for adding a block to the blockchain.

Figure 9 shows a system comprising a main chain and a side chain.

Figure 10 provides a practical example of an implementation of the methods disclosed herein.

Detailed Description of the Embodiments

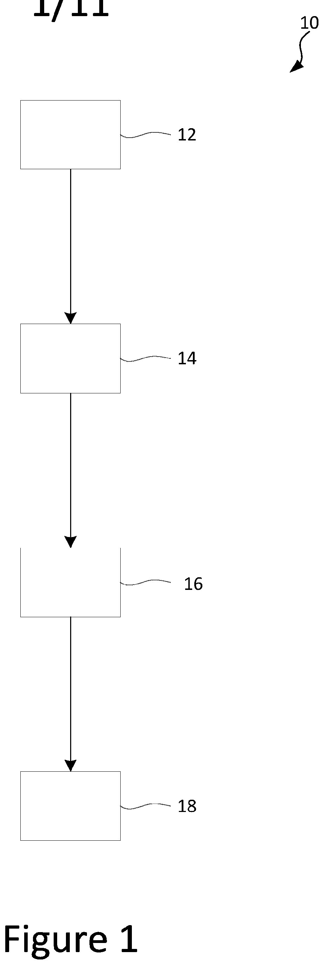

Referring to Figure 1, there is shown a blockchain 10. The blockchain comprises a first block 12, a second block 14, a third block 16, and a fourth block 18. Each block is dependent on the previous block, so that the fourth block depends on the third block, the third block depends on the second block, and the second block depends on the first block. More generally, the nth block of the blockchain depends on the (n-1)th block and thereby depends on each previous block of the blockchain.

In this way, the blockchain 10 is useable to implement an immutable ledger. Any change to a block of the blockchain alters each subsequent block and so is immediately detectable.

Typically, each block comprises a hash of the previous block; changing any block of the blockchain 10 (e.g. altering a transaction within a block) will alter the hash of that block and therefore alter the hash of each subsequent block (since the subsequent hashes depend on the altered hash).

Typically, each block comprises a body, which contains a record of transactions within the block, and a header, which comprises information relating to the block. For example, the header may comprise: a value relating to these transactions (e.g. a hash relating to a Merkle tree, which Merkle tree comprises the transactions); a value (e.g. a hash) relating to a previous block; and/or a value relating to a proof of work problem or puzzle that has been solved in order to mine the block.

The blockchain 10 is typically dependent on a proof of work problem. Nodes are required to solve puzzles relating to this problem in order to influence the consensus mechanism of the blockchain. For example, the problem may be a hashing problem, where a node is required to determine a nonce that can be hashed with an input value to obtain an output value with a certain number of leading zeros. Each puzzle for this problem may relate to finding a nonce for a different input value. Typically, the input values for the puzzles are dependent on a block of the blockchain (e.g. the input value for a puzzle for the nth block of the blockchain may be a hash of the (n-1)th block).

Typically, the blockchain 10 comprises a decentralized blockchain and/or a distributed blockchain. More generally, the methods described herein are applicable to distributed ledgers and/or public consensus networks (PCNs), e.g. networks that require a consensus between a plurality of participant nodes.

Typically, each block comprises information regarding a change of state of a variable. In an unspent transaction output (UTXO) blockchain, such as Bitcoin, the block may comprise a series of transactions between two addresses (e.g. between a sender and a recipient). Typically, in UTXO blockchains, the addresses are single use, so that each address is used only a single time as the sender for a transaction. In an account model blockchain, such as Ethereum, the block may comprise a series of state changes for an account (e.g. an account may receive an amount of currency and/or a state of the account may change). The accounts typically persist throughout the blockchain, such that accounts can be referenced repeatedly.

Each block of the blockchain 10 typically comprises at least one a dynamic-membership multi-party signature (DMMS) which is the basis for a consensus mechanism; the DMMS may comprise signatures of computational power (SoCP) and/or signatures of knowledge (SoK).

The blockchain 10 typically uses a sybil-defence factor, such as a proof of work and/or proof of stake sybil-defence factor in order to protect the blockchain from sybil attacks.

A consensus mechanism based on signatures of computational power employs evidence of computational power in order to build consensus on a history. Therefore, only parties that have committed a certain computational power to the blockchain 10 may be eligible to contribute to building a consensus on a history of the blockchain. In particular, only parties that have committed a certain computational power may be able to signal a favoured choice of history.

Using Bitcoin as an example, a candidate history is selected by selecting an existing fork of the blockchain; typically this involves selecting the longest fork of the blockchain. A new block can then be added to this selected fork of the blockchain by a party that holds a relevant signature of computational power.

Typically, consensus mechanisms based on signatures of computational power are paired with proof of work sybil-defence factors. As an example, Bitcoin uses a proof of work sybil-defence factor, and the signatures of computational power are related to the proof of work sybil-defence factor. More specifically, when a party finds a suitable nonce for the cryptographic problem of Bitcoin, a signature of computational power for this party is included in the DMMS for the block and this party becomes eligible to signal a favoured choice of history (e.g. to decide on a fork of Bitcoin to which the block should be added).

Other examples of networks that use a consensus mechanism based on signatures of computational power include Ethereum and GraphChain (which is based on a Directed Acyclic Graph as opposed to a blockchain).

A consensus mechanism based on signatures of knowledge employs evidence of knowledge in order to build consensus on a history. Therefore, only parties that hold relevant knowledge may be eligible to contribute to building a consensus on a history of the blockchain 10. The knowledge may, for example, relate to knowledge of private keys that relate to (public keys relating to) an amount of a cryptographic asset.

As mentioned above, conventionally a consensus mechanism based on signatures of computational power is paired with a proof of work sybil-defence factor. With Bitcoin, in order to propose a block for addition to the blockchain, the miner presents a solution to a cryptographic puzzle. This solution is evidence of computational power expended by the miner and so contributes to the signatures in the DMMS as well as providing proof of work for the sybil-defence factor.

Equally, conventionally a consensus mechanism based on signatures of knowledge is paired with a proof of stake sybil-defence factor. A signature may evidence ownership of a certain blockchain address, which blockchain address relates to a certain amount of an asset relating to the blockchain.

The use of a proof of work sybil-defence factor alongside a consensus mechanism based on signatures of computational power provides security so long as no single node controls more than 50% of the total computational power devoted to the proof of work. In this situation, in the long term this node is able to solve a majority of the problems and so can gain a majority of the influence on the building consensus on the history of the blockchain 10 (and thereby gain control over the blockchain).

Gaining more than 50% of total computational power devoted to the proof of work problem is typically implausible once a blockchain has become popular and has a large number of nodes. However, it may still be possible for a node to gain control over the blockchain if they are able to more efficiently solve the problem. In particular, if a node is able to determine a new algorithm that efficiently solves the problem this node is motivated to keep this algorithm secret and use it to exert an undue influence on the building of a consensus on the history of the blockchain (as compared to their devoted computational power). In such a way, a node that controls only a minority of the total computational power devoted to the proof of work problem may be able to take control over a blockchain.

The present disclosure relates in part to a method of implementing a blockchain that considers a plurality of proof of work problems. Using a plurality of problems, e.g. as a plurality of sybil-defence factors, provides increased resilience, since this avoids a node taking control of the blockchain by finding a new optimal solution to a single proof of work problem.

While the entries on the blockchain may comprise transactions relating to an asset (e.g. an amount of Bitcoin), it will be appreciated that blockchains may be used for numerous other purposes. In addition to, or instead of, transactional data, entries may comprise regulatory data, records of transfers of goods, indications of user activity, etc. In general, blockchains are useful for storing entries relating to any situation where an immutable ledger is desirable.

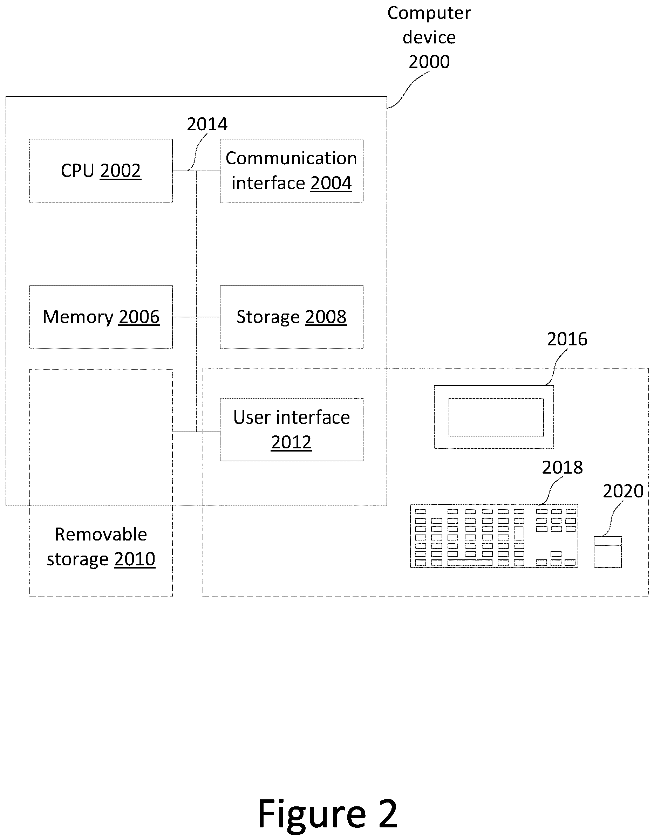

Referring to Figure 2, the blockchain 10, is configured, added to, and/or viewed using a computer device 2000. In particular, each node that validates transactions is implemented using the computer device 2000. Similarly, each mining or proposing node, which propose blocks for addition to the blockchain, is implemented using the computer device 2000. Furthermore, each viewer of the blockchain accesses the blockchain using the computer device 2000. Nodes, miners, and/or viewers may be implemented on the same computer device.

Each computer device 2000 typically comprises a processor in the form of a CPU 2002, a communication interface 2004, a memory 2006, storage 2008, removable storage 2010 and a user interface 2012 coupled to one another by a bus 2014. The user interface comprises a display 2016 and an input/output device, which in this embodiment is a keyboard 2018 and a mouse 2020.

The CPU 2002 executes instructions, including instructions stored in the memory 2006, the storage 2008, and/or the removable storage 2010.

The communication interface 2004 is typically an Ethernet network adaptor coupling the bus 2014 to an Ethernet socket. The Ethernet socket is coupled to a network, such as the Internet. The communication interface facilitates communication between the nodes of the blockchains and enables each node to validate and propagate transactions and each miner to propose blocks to the network. It will be appreciated that any other communication medium may be used by the communication interface, such as area networks, infrared communication, and Bluetooth®.

The memory 2006 stores instructions and other information for use by the CPU 2002. The memory is the main memory of the computer device 2000. It usually comprises both Random Access Memory (RAM) and Read Only Memory (ROM).

The storage 2008 provides mass storage for the computer device 2000. In different implementations, the storage is an integral storage device in the form of a hard disk device, a flash memory or some other similar solid state memory device, or an array of such devices. To run a full node of the blockchain 10, that is a node which contains the entirety of the blockchain, the storage is typically required to have a large capacity. The computer device may also be capable of running a partial, or light, node, where the storage 2008 stores only a portion of the blockchain.

The removable storage 2010 provides auxiliary storage for the computer device 2000. In different implementations, the removable storage is a storage medium for a removable storage device, such as an optical disk, for example a Digital Versatile Disk (DVD), a portable flash drive or some other similar portable solid state memory device, or an array of such devices. In other embodiments, the removable storage is remote from the computer device, and comprises a network storage device or a cloud-based storage device.

Each node, miner, and viewer of the blockchain 10 uses a computer device 2000 to implement aspects of the methods and systems as described herein. Typically, the computer device used by each party is specialised; for example nodes proposing blocks to be added to a blockchain may use a computer device that comprises an application specific integrated circuit (ASIC), a field programmable gate array (FPGA), or a graphics processing unit (GPU). In some embodiments, the computer device comprises numerous racks of ASICs, FPGAs, or GPUs with a single user interface, where the computer device may be wholly specialised for mining blockchains.

Typically, the computer device 2000 of each node is arranged to receive transactions, to validate these transactions, and then to propagate the validated transactions throughout a network. The computer devices of the miners (which miners may also be nodes) are then able to collate a number of validated transactions into a block; this block can then be proposed for addition to a blockchain. The addition of the proposed block to the blockchain 10 may rely on, for example, providing a solution to a proof of work problem (as occurs in e.g. Bitcoin: "Bitcoin: A Peer-to-Peer Electronic Cash System. Nakamoto, S. (2008) https://bitcoin.org/bitcoin.pdf") or providing a proof-of-stake (as occurs in e.g. Algorand: "ALOGRAND Chen, J. (2017) https://arxiv.org/pdf/1607.01341.pdf).

In an exemplary usage of the blockchain 10, a node combines a number of transactions into a block, and then proposes this block for addition to the blockchain. Other nodes validate and propagate this block to the users of the blockchain. Once the block is added to the blockchain, a transaction included in this block can be presented to a user, where the information contained in the transaction can be used for a variety of purposes (e.g. to improve the design of machines, to ensure adherence to government regulations, or to identify risky or endangering behaviour). It will be appreciated that while the term transaction is used throughout - and is commonly used in reference to blockchains - each blockchain is more generally capable of the (preferably immutable) storage of information. Therefore, while transactions may relate to a transfer of currency, more generally the transactions in a block may relate to any information and may have no relation to financial transactions.

A computer program product is provided that includes instructions for carrying out aspects of the method(s) described below. The computer program product is stored, at different stages, in any one of the memory 2006, storage device 2008 and removable storage 2010. The storage of the computer program product is non-transitory, except when instructions included in the computer program product are being executed by the CPU 2002, in which case the instructions are sometimes stored temporarily in the CPU or memory. It should also be noted that the removable storage is removable from the computer device 2000, such that the computer program product may be held separately from the computer device from time to time. Different computer program products, or different aspects of a single overall computer program product, are present on the computer devices used by any given miner and/or user of a blockchain.

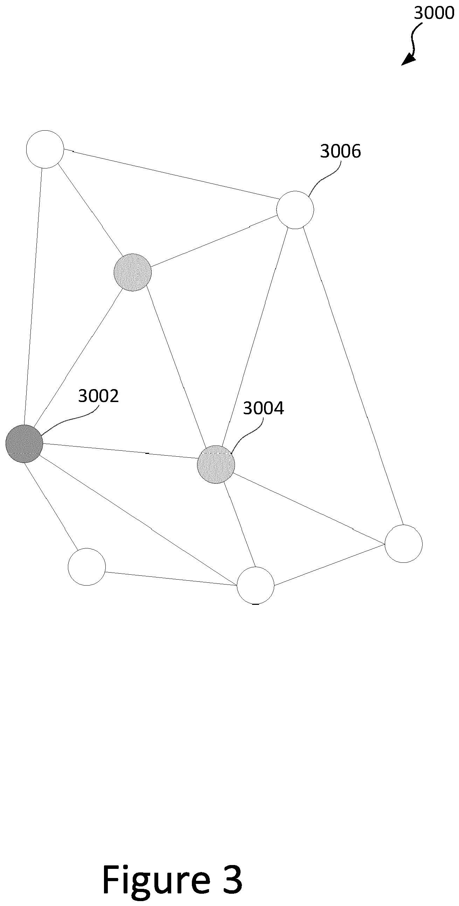

Referring to Figure 3, the methods disclosed herein are typically implemented in relation to a network 3000, which network is typically arranged to view, add to, and/or configure a blockchain (e.g. the blockchain 10 of Figure 1).

The network 3000 comprises one or more nodes 3002, 3004, 3006, which nodes are arranged to communicate (directly or indirectly) to propagate information. The nodes typically comprise computer devices.

The network 3000 may have one or more of the following properties:

- Be a centralised network, in which communications are propagated by a single node (or a group of nodes).

- Be a decentralised network, in which nodes of the network are arranged to communicate with each other directly (e.g. not via a central authority).

- Be a distributed network, where records relating to the network are stored on a plurality of the nodes. This prevents a single node from editing the record (since this editing would be noticed by the other nodes).

Typically, the disclosures herein are implemented on a decentralised, and/or distributed, network.

The nodes 3002, 3004, 3006 are arranged to communicate with each other so as to propagate information throughout the network. This information typically comprises blocks of the blockchain. The nodes may be configured differently and/or arranged to provide different services. For example, the network may comprise:

- A mining node, which mining node is arranged to propose blocks for addition to the blockchain.

- A validating node, which validating node is arranged to validate the blocks proposed by the miner (e.g. confirm that the blocks are correctly formatted and/or comprise valid transactions). A validating node may run a 'full' node and comprise a record of the entire blockchain. Such a full validating node may validate a block of the blockchain based on previous blocks of the blockchain (e.g. to ensure that a party transferring an asset does indeed hold that asset). A validating node may run a 'light' or 'partial' node and comprise a record of only a part of the blockchain. Such a partial validating node may validate a block based on the transactions in that block and/or block headers from previous blocks (e.g. to ensure that a hash of the transactions of block corresponds to a value in the header of the block).

- A propagating node, which propagating node is arranged to receive information from other nodes and then forward this information to ensure that it reaches other nodes in the network.

More generally, one or more nodes of the network may be arranged to influence a consensus mechanism of the blockchain, to participate in the addition of blocks to the blockchain, and/or to propagate blocks throughout the network.

It will be appreciated that nodes may provide a plurality of services; for example, mining nodes typically also perform validation and propagation.

The methods disclosed herein are typically carried out by one or more of the nodes of the network 3000.

Typically, nodes are implemented on the computer device 2000. The methods described herein may then be performed using the computer device. The methods typically relate to an interaction between computer devices, where information may be transmitted between the computer devices of a plurality of nodes. In particular, information determined at a first computer device (e.g. a first node) may be transmitted to a second computer device (e.g. a second node) and output on the further computer device. Where the information is part of a block of the blockchain, the second computer device may be able to determine that the information is recorded in an immutable manner. The information, and the knowledge that it is recorded in an immutable manner, can affect the actions of the second node and/or the party controlling the second node.

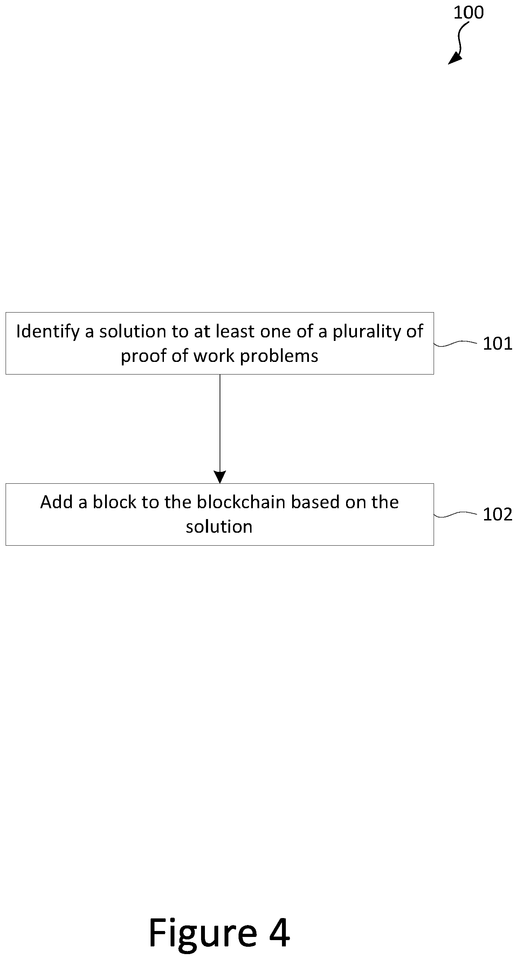

Referring to Figure 4, there is described a method 100 of adding a block to the blockchain 10 based on a plurality of proof of work solutions. This method is typically implemented by one of the nodes of the blockchain.

In a first step 101, a solution to at least one of a plurality of proof of work problems is identified.

In a second step 102, a block is added to the blockchain 10 based on this solution.

Typically, this comprises a node of the blockchain 10 proposing a block to the other nodes of the blockchain. This block is added to a version of the blockchain if the block comprises an appropriate solution. The solution may relate to the header of the block, for example the solution may comprise a hash of the header of the block having a certain value.

Typically, this method is used with a consensus mechanism based on signatures of computational power (SoCP). A node that provides a solution receives a number of signatures of computational power that enable the node to vote on the history of a blockchain. In this example, signatures of computational power are provided to the node that provides a solution and the voting on the consensus of the blockchain comprises this node adding a block to the blockchain (where the node providing the solution is able to decide on which version of the blockchain the block is added, e.g. by choosing an input value to a proof of work problem). More generally, a plurality of parties may be awarded signatures of computational power and be able to vote on the history of the blockchain.

Conventional proof of work blockchains depend on a single proof of work problem. This presents a single point of failure. For example, if one of the nodes finds an optimal approach to this problem and keeps this approach secret, they will be able to control the addition of blocks to the blockchain by providing solutions more often than the other nodes.

According to the present disclosure, there is described a blockchain that depends on a plurality of proof of work problems. This overcomes the problem of a single point of failure.

In various embodiments:

- The solution of the first step 101 is a solution to either of a first proof of work problem or a second proof of work problem. Therefore, a node that solves either of these problems is able to propose a block for addition to the blockchain 10.

- The solution of the first step 101 is a solution to each of the proof of work problems. Therefore, a node may need to provide a solution to both of a first proof of work problem and a second proof of work problem in order propose a block for addition to the blockchain 10.

- The solution of the first step 101 is a solution to a specific proof of work problem. This specific proof of work problem may, for example, be based on a predetermined order.

Typically, each proof of work problem is adjustable. For example, a difficulty of a required solution, such as a number of leading zeros required, may be adjustable. This enables each problem to be made more difficult as nodes discover optimisations to these problems (e.g. improved hardware or software). Typically, the problems are adjusted so as to maintain a target time between blocks and/or solutions. For example, the problems may be adjusted so that the time between solutions is approximately the same for each problem and/or the probability of proposing a block based on a problem is the same for each of the problems. Typically, this comprises each problem being adjusted so as to be solved in the same average time, so that in the long term each proof of work problem is equally represented in the blockchain 10. Where a reward is provided for proposing a block, this also results in the (long-term) reward for finding a solution being the same for each of the proof of work problems.

It will be appreciated that while the above description has primarily discussed the use of two proof of work problems, in practice any number of proof of work problems may be used.

In the method 100 of Figure 4, solutions to the proof of work problems are used to determine the proposer of a block to the blockchain. More generally, these solutions are used to determine a parameter relating to the influence of a node on a consensus mechanism of the blockchain 10 and/or a reward for a node. The solution may for example be used to determine:

- The eligibility of one or more nodes to participate in the addition of a block to the blockchain 10.
- A proposer (e.g. miner) of a block.

- A validator and/or signer of a block.
- The weighting that a node has on the consensus mechanism of the blockchain 10.
- A reward for participating in the addition of the block to the blockchain 10.

As described with reference to Figure 4, a node providing a solution may become the proposer of a block. In this case (e.g. as occurs with Bitcoin), the identification of the solution is used to determine a proposer of a block.

The method may comprise:

- Passively determining the parameter (and/or the influence and/or reward). For example, a node that finds a solution to one of the proof of work problems may be able to propose a block. This block is transmitted to other nodes, where the other nodes are able to determine (e.g. identify) the proposing node based on the provision of the solution. Therefore, determining the influence of a node may comprise the single step of identifying a proposer of a block - and simultaneously identifying that this proposer is influencing the consensus mechanism of the blockchain.

- Actively determining the parameter (and/or the influence and/or reward). For example, a node may determine a proposer for a future block based on a solution to one of the proof of work problems, where the proposer may be selected from a pool of nodes that have proposed solutions. The determined proposer may then be informed of their status by the node identifying the solution. In practice, this typically comprises a proposer and/or validator of a block determining a proposer for a subsequent block. Therefore determining the influence of a node may comprise a two-step process of determining a parameter relating to the solution and thereafter determining the influence of the node (or a reward) based on this parameter.

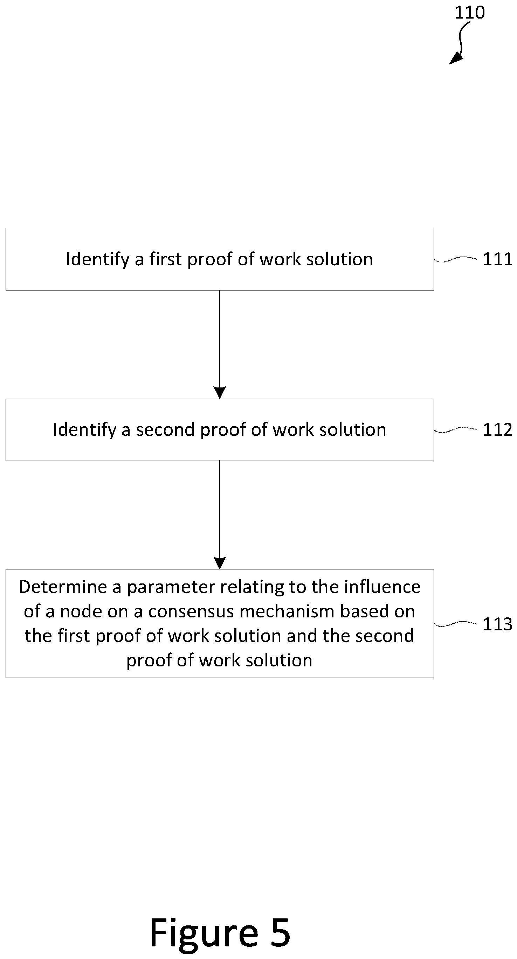

Referring to Figure 5, a method 110 of determining a parameter relating to the influence of a party on a consensus mechanism (e.g. of the blockchain 10) based on a first proof of work solution and a second proof of work solution. Such a method is typically carried out by the computer device 2000 of one of the nodes of the blockchain.

In a first step 111, the node identifies a first proof of work solution. This first solution may, for example, relate to a first proof of work problem, such as finding a nonce that can be hashed with a block to provide a hash with a certain number of leading zeros.

In a second step 112, the node identifies a second proof of work solution. This second proof of work solution may relate to the first proof of work problem, where the first and second proofs may be different proofs to the same problem. Typically, however, the second proof of work solution relates to a second proof of work problem, where the second proof of work problem differs from the first proof of work problem. Even if a party finds a substantially optimised (e.g. much faster) algorithm for solving the first proof of work problem, they will still need to devote a substantial amount of computing power to solve the second proof of work problem.

In a third step 113, the node determines a parameter relating to the influence of a node on a consensus mechanism based on the first proof of work solution and the second proof of work solution. The parameter typically relates to one or more of:

- A probability of the node participating in the addition of a block to a blockchain. For example, a node that submits valid solutions to each of the proof of work blockchains may be selected as the proposer of a block of the blockchain 10 (and/or a validator or signer of a block of the blockchain).

- A reward for the party. The parameter may for example, relate to a block reward and/or a portion of transaction fees relating to transactions in a proposed block. In some embodiments, a node that submits valid solutions to each of the proof of work blockchains is selected as the proposer of a block of the blockchain 10 and then receives a block reward for proposing this block. More generally, a node submitting valid solutions may be rewarded whether or not they participate in the addition of a block to the blockchain.

The first solution and/or the second solution may be contained, (and/or committed to (e.g. by way of a hash commitment), in a proposed block (or a header of the proposed block) and/or may be submitted in the header of a proposed block. For example, the first solution and/or the second solution may relate to a nonce that is included in the header of a proposed block. This block may be transmitted from a first node of the blockchain 10 to one or more further nodes of the blockchain. The further nodes determine that the nonces are indeed solutions to the first and/or second proof of work problems and may then validate the block, and propagate the validated block to yet further nodes of the blockchain.

Equally, the first solution and/or the second solution may be submitted in the body of a block; for example, the solutions may be submitted as transactions in a block.

In some embodiments, the first solution and the second solution are provided simultaneously (e.g. they may both be provided in a header of the same block). More generally, the solutions may be provided at any time. As an example, the first solution may be provided in an (n-1)th block of the blockchain 10 and the second solution may be provided in an nth block of the blockchain. The parameter may then relate to the (n+1)th block (or another future block) of the blockchain. In practice, this may comprise a pool of eligible participants for the addition of a block being selected based on historic submissions of solutions to the first and second proof of work problems. For example, a proposer for a block may be selected based on a number of solutions to each problem that have been provided in the past ten blocks of the blockchain.

In some embodiments, the first proof of work problem and the second proof of work problem are linked such that a solution for the first problem provides an input for the second problem. In such an embodiment, the provision of this solution for the second problem evidences the solving of both the first and second problems. A single solution to the second problem may, for example, be used to select a proposer of a block (e.g. by a node including the solution in the block header of a proposed block), where this selection will be dependent on solutions for both of the problems. In a practical example, finding a solution to the first problem may involve finding a nonce that hashes using a first hashing function with an existing value (e.g. an existing block header) to give an output with a certain number of leading zeros. Finding a solution to the second problem may then comprise undertaking a similar process (e.g. finding a nonce that hashes using a second hashing function with an existing value), with the first solution being used as the existing value for the second problem.

While this method relates to the determination of solutions to a first proof of work problem and a second proof of work problem, it will be appreciated that the method more generally relates to the determination of a computational power devoted to the first problem and the second problem, where this computational power can be determined by consideration of the first solution and the second solution. Yet more generally, the method may be considered to relate to the determination of the influence of a node and/or a reward for a node based on a first factor relating to the computational power devoted to a first proof of work problem (e.g. a number of solutions to the first proof of work problem) and a second factor relating to the computational power devoted to a first proof of work problem (e.g. a number of solutions to the second proof of work problem).

In the example given above, the parameter has been described as affecting the probability of a node participating in the addition of a block to a blockchain and/or the reward for a node. In various embodiments, determining the influence of the node on a consensus mechanism of the blockchain (and/or the parameter) relates to determining one or more of the following components of influence:

- The eligibility of a node to be selected to participate in building a consensus on a history of the blockchain.

- The eligibility of a node to be selected to participate in the addition of a block to the blockchain.

- The degree of active participation of the node in building a consensus and/or adding a block. This degree may relate to a number of votes that the node contributes in relation to the building of a consensus history. Another example of defining the degree of active participation of a node is defining whether the node is a proposer and/or a validator for a block (where a validator may be considered to have less influence and/or may receive a smaller reward).

- A weighting of signatures and/or a weighting of contributions to the DMMS.

- A weighting of instances of participation and/or contributions to the building of consensus.

- The reward received by a node for being eligible to participate and/or active participation in building a consensus and/or adding a block to the blockchain.

- A confidence weighting and/or a participation weighting. In some embodiments, the eligibility to participate in the building of a consensus and/or the addition of a block may depends on a deposit held by that node, while the weighting of each node's vote depends on the devoted computational power of that node. In some embodiments, building consensus may involve summing a party's signatures in the DMMS and weighting these based on that node's computational power.

Where the description describes a parameter (or a solution) altering the eligibility to participate and/or the maximum degree of participation of the node, it will be appreciated that more generally the parameter (or the solution) may alter the influence of the node on a consensus mechanism.

Typically, the components of the influence are dependent on different proof of work problems (or different groups of proof of work problems). For example, the eligibility of a node to participate in the addition of a block to a blockchain may depend on solutions provided by that node for the first proof of work problem and the reward received by the node for being eligible (or for adding a block to the blockchain) may depend on solutions provided by that node for the second proof of work problem.

The components of the influence may each depend on different groups of proof of work problems, where these groups may overlap. For example, the eligibility of a node to participate in the addition of a block to the blockchain may be determined based on the first proof of work problem and the reward for the addition of the block may be based on both of the first and second proof of work problems.

Equally, the solutions submitted by a node to the proof of work problems may alter the reward received by a node for the addition of a block to the blockchain (whether or not that node is an active participant in the addition). This alteration of reward is related to (and included in) the alteration of the influence of a node on the consensus mechanism, since the alteration of the reward affects the motivation of a node to participate in a sybil-defence factor (which sybil-defence factor affects the building of a consensus, e.g. by altering the eligibility of nodes to participate in building a consensus).

Not least due to this, each part of this description that describes a parameter relating to the influence of a node on the consensus mechanism should also be taken to describe the possible use of a parameter to alter a reward received by a node (and *vice versa*).

In some embodiments, a node is eligible to participate in the building of a consensus only if the node has provided a threshold number of solutions to the first proof of work problem and/or the second proof of work problem. The node may then, if selected, choose to actively participate in the building of a consensus (e.g. to be an active participant) or choose not to actively participate in the building of consensus. Either way, the influence of the node on the consensus mechanism will be dependent on the number of solutions provided by that node (since this provision gives the node the option to actively participate, if and when the node is selected). It will be appreciated this eligibility may also depend on other factors, such a deposit held by the node (e.g. a proof of stake).

Typically, nodes are able to choose whether or not to be an active participant. Providing solutions to the proof of work problems may result in a node becoming an eligible participant, and possibly being selected to participate; however this node may be able to choose not to actively participate in the building of a consensus and/or the addition of blocks. Equally, this node may be prohibited from such active participation (e.g. a node may be prohibited from actively participating in the building of consensus on blocks containing transactions involving that node, or a node may become inactive due to connectivity issues). Generally, a node that is an eligible participant may be either an active participant or an inactive participant, where only eligible participants may have a chance of being selected to participate in the building of a consensus and/or the addition of blocks. Eligible participants may become active participants when they are selected to participate in the building of a consensus and/or the addition of blocks. Equally, eligible participants may become active participants when they agree to participate in the building of a consensus and/or the addition of blocks (e.g. after they have been selected as a participant). Normally, for any given block only a subset of the eligible participants are selected participants.

In some embodiments, all eligible participants receive rewards relating to the addition of blocks to the blockchain. In some embodiments, only selected participants or only active participants receive such rewards.

By providing a reward to all eligible participants, a risk-free return can be guaranteed, which incentivises nodes to seek solutions. In practice, with a blockchain such as Bitcoin the reward for proposing a block is typically substantial. However, a node with only a little computing power is discouraged from attempting to propose blocks, since the likelihood of this node finding a solution to the proof of work problem (and proposing a block) is only very small (so the node has a very small chance of a large reward). Distributing rewards among eligible participants results in each node being likely to obtain a reward (albeit a smaller reward) so that even parties with small resources are encouraged to become nodes of the blockchain.

In some embodiments, the solutions provided by a node are related to a maximum probability of being selected to participate and/or a maximum degree of active participation. In particular, the probability of a node being selected to participate in the addition of a block may increase as that node devotes an increasing amount of computational power to the proof of work problems. However, the node may still choose not to actively participate (i.e. not to be an active participant) in the addition of blocks (e.g. they may have no active participation in the addition of blocks). This node may still receive rewards for the addition of blocks due to being an eligible participant (even if the node is not selected to participate and/or an active participant).

The possible roles of a node may depend on the number of solutions (or the amount of computational power) provided by that node; for example, a first number of solutions may be needed to be eligible to validate a block, while a second, greater, number of solutions is needed to be eligible to propose a block. Similarly, a solution to only a single proof of work problem may result in a node being eligible to validate a block while solutions to both proof of work problems may be needed to be eligible to propose a block.

Conventional blockchains that use proof of work as a sybil-defence factor rely on a single proof of work problem; such blockchains are vulnerable to the problem being broken (e.g. an efficient solution to the problem being discovered). Furthermore, such blockchains are vulnerable to centralisation if a significant optimisation for computing a proof of work problem is obtained by a miner, and that optimisation is not shared.

For instance, searching for a partial hash pre-image (a popular proof of work problem) can be optimised in hardware, and to some extent in software. Also, a hash function may be broken, as described in "The first collision for full sha-1; Marc Stevens, Elie Bursztein, Pierre Karpman, Ange Albertini, and Yarik Markov; Annual International Cryptology Conference, pages 570-596. Springer, 2017" and "Re: Dealing with sha-256 collisions; Satoshi Nakamoto (2010) https://bitcointalk.org/index.php?topic=191.msg1585msg1585".

This will be a particular problem for conventional blockchains as hardware and software develops in the future; problems that are currently considered to be unsolvable or unbreakable may become breakable as technology develops.

There exist classes of proof of work problems for which there is a higher degree of confidence that these problems cannot be broken; for example, NP-complete problems. Such NP-complete problems are hard to compute (with the computation time typically scaling exponentially in problem size), but relatively computationally light to verify the correctness of a solution (the verification time typically scales polynomially in problem size). However, NP-complete problems have a likelihood of significant speed-up through algorithmic optimisation, and so this typically renders them unsuitable for use in proof of work problems (and at least for this reason conventional proof of work blockchains do not use NP-complete problems).

With the present disclosure, the influence of a node on a consensus mechanism and/or a reward for participating in the addition of a block to the blockchain 10 is based on a plurality of proof of work problems so that, in order to centralise mining power around themselves while also remaining economically competitive, a node would need to develop significant optimisations for a plurality of proof of work problems. This enables the use of NP-complete problems for at least one of the proof of work problems.

More generally, at least one of the proof of work problems may be: NP (a problem with a solution that can be verified in polynomial time); NP-hard (a problem H is NP-hard when every problem L in NP can be reduced in polynomial time to H; that is, assuming a solution for H takes one unit time, H's solution can be used to solve L in polynomial time); and/or NP-complete (both NP and NP-hard).

Yet more generally, the proof of work problems may comprise any asymmetric problem, where the computational cost of solving the problem (and/or the time taken to find a solution) is greater than the computational cost of verifying a solution (and/or the time taken to verify a solution).

Furthermore, one or more of the proof of work problems may comprise a quantum-resistant problem, which is resistant to attacks from quantum computers. This offers future-proofing and, in combination with the use of more conventional problems (e.g. based on SHA-256) can offer problems that are suitable for both conventional computers and quantum computers.

Yet further, one or more of the proof of work problems may comprise an inverse problem. An inverse problem requires the determination of a set of initial conditions given a set of final conditions (e.g. finding a past state given a present/future state). Typically, such a problem considers a situation where there is an increase in entropy in the forward time direction, so finding the initial conditions given the final conditions is more computationally intensive than checking that these initial conditions result in the final conditions. Therefore, such problems are typically hard to solve, but relatively easy to check. An example of such an inverse problem is protein design, e.g. finding a protein that folds in a certain way given the required folding.

Yet further, one or more of the proof of work problems may be dependent on a human input. Conventional proof of work problems are based solely on the performance of a computer process (e.g. where a computer is used to find a string that produces a certain value when hashed). According to the present disclosure, the proof of work problem may comprise the designing of an apparatus (e.g. hardware or software) that is suitable for performing a process in an improved manner. For example the proof of work problems may be selected from one or more of the following types of proof of work:

(i) Computer Processing of data/solving puzzles using an algorithm executed on (computer) hardware.
(ii) Computer/Human Design of algorithms (e.g. to solve puzzles).
(iii) Computer/Human Design of hardware (e.g. improvements in hardware designed).
(iv) Computer/Human Design of technology (e.g. to provide energy to power computer hardware).

Conventionally, the determination of a solution to a proof of work problem is automated , e.g. based on a provided result being beneath/above a threshold. With the example of Bitcoin, it may be automatically determined that a hashed value has a certain number of leading zeros. With the proof of work problems mentioned above, the determination of a solution may be less straightforward. Therefore, the method for verifying a proof of work problem may include one or more of:

- Efficient automated verification (e.g. determining that a solution is within a certain range and/or gives a certain result).
- Non-efficient automated verification (e.g. recompilation of the solution).

- Non-automated verification (e.g. obtaining consensus from the nodes of the blockchain that the solution is a valid solution).

Conventional blockchains based on a proof of work problem typically require this proof of work problem to be progress-free. That is, the proof-of-work calculation at time T must not depend on any part of a calculation at time T' < T. In practice, this means that for each block of the block chain an input to the proof of work problem is based on a previous block, so that a solution used for the nth block must depend on a feature of the (n-1)th block. The use of progress-free problems prevents a node from secretly calculating a number of solutions and using these to rapidly add a number of blocks to the blockchain; however, this conventional methodology limits the problems that can be used. With the present disclosure, non-progress-free problems may be used for a subset of the proof of work problems.

The method 110 of Figure 5 considers the use of two proof of work problems being used to determine the parameter. It will be appreciated that this may be generalised to a situation where w proof of work problems are used to determine the parameter.

In this situation with w proof of work problems, the parameter depends on solutions provided for each of the w proof of work problems. In the method 110 of Figure 5, where the influence of the node on the consensus mechanism depends on a solution being provided to any of the problems, each node may be incentivised to focus on only a single problem.

In order to discourage this, the parameter is typically determined in such a way that parity is encouraged, where parity relates typically to a similar amount of computational power being devoted to each of the proof of work problems. This may comprise the parameter being dependent on factors relating to the proof of work problems, e.g. $P = \min(a_1, a_2, ..., a_w)$, where $a_q$ is a factor relating to a proof of work solution for a proof of work problem q (and where there are w proof of work problems being considered).

Parity may relate to:

- Global parity, where the amount of total computational power devoted to each of the proof of work problems by all of the nodes of the blockchain is the same.

- Node parity, where the amount of computational power devoted to each of the proof of work problems by a given node is the same.

In practice, these types of parity are closely linked; if node parity is achieved for each of the nodes, there will typically be global parity. However, it is possible to achieve global parity without achieving node parity (e.g. if each node specialises in a certain problem). Typically, node parity is encouraged so that the nodes are all incentivised to devote a similar computational power to each of the proof of work problems.

Equally, parity may relate to:

- Cost parity, where the cost of increasing any factor is the same (for a given node).

- Factor parity, where each factor is the same (for a given node).

Different proof of work problems may have different associated costs, so that cost parity may be reached for a node where the factors of that node have substantially different values. Typically, factor parity is encouraged, so that the nodes are incentivised to have a similar factor for each of the proof of work problems.

Assuming that each node has access to similar hardware and software, over time both factor and cost parity are likely to be achieved by all nodes (since any factor with a comparatively low opportunity cost will be increased by a node until it no longer has a comparatively low opportunity cost; thus in the long term the opportunity costs for each of the factors tend to converge).

Factor parity may relate to each factor being for a given node being the same and/or each normalised factor for that node being the same. Typically, factor parity relates to the normalised factors being the same.

It will be appreciated that where parity is discussed, this could relate to any of the above types of parity (which may each be desirable in certain situations). Typically, references in this disclosure relate to at least factor parity for a node.

The factor for, each proof of work problem may depend on one or more of:

- a number of solutions provided in a given time (e.g. in a preceding number of blocks);

- a minimum number of solutions provided in a given time;

- an average number of solutions provided in a given time;

- a maximum number of solutions;

- a distribution of solutions (e.g. an average number of solutions and/or a variance relating to the time between the submission of these solutions).

- a number of solutions provided in a given time being greater than a threshold (e.g. the parameter may equal zero where a node has not provided a minimum number of solutions for each proof of work problem, so that a node that has not contributed any proof of work cannot contribute in the building of a consensus on the history of the blockchain).

Typically, factors are determined for each node of the blockchain 10, where each factor is also dependent on the other nodes. As an example, the factor may be equal to the number of solutions found by a node in a given time divided by the number of solutions found by all nodes in this time (e.g. $a_i^q = \frac{N_i^q}{\sum_j N_j^q}$, where $a_i^q$ is the factor for a node i finding solutions to a proof of work problem q, $N_i^q$ is the number of solutions provided by the node i for the proof of work problem q, and there are j nodes of the blockchain 10. Each factor is typically between 0 and 1.

The parameter (and/or the influence and/or the reward) for a node may also depend on other factors not related to a proof of work problem, for example the parameter (and/or the influence and/or the reward) may depend on factors relating to:

- a different sybil-defence factor (such as a proof of stake or proof of storage),

- a characteristic of the node providing solutions (e.g. the previous activity of the node on the blockchain 10),

- a time and/or block number and/or

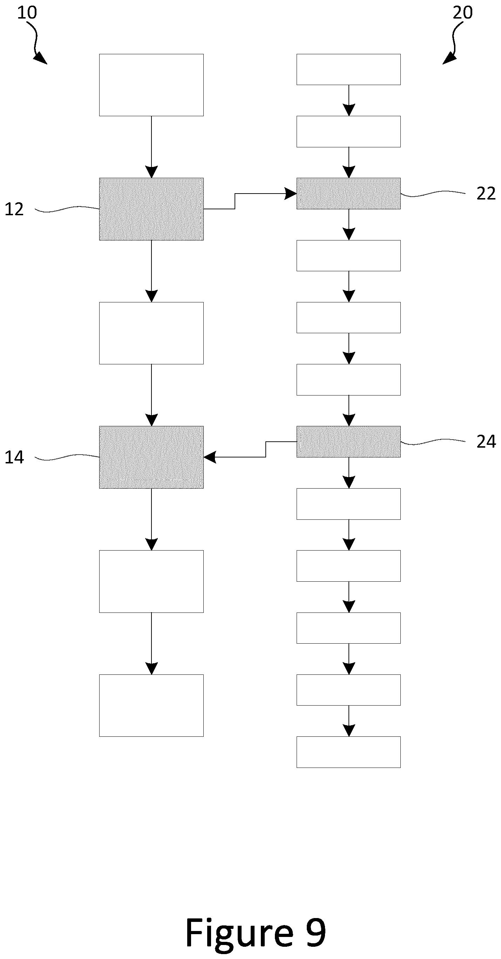

- another blockchain. In particular, the parameter may depend on the activity of a node on a further blockchain. For example, there may be a factor determined based on a number of blocks added to this second blockchain by one of the nodes of the blockchain, where the parameter depends on this factor. Similarly, there may be a factor determined based on a deposit held by one of the nodes of the blockchain in relation to the second blockchain. In this way, nodes can be incentivised to participate in the building of a consensus on a second blockchain. A system comprising two blockchains is described below with reference to Figure 9.

Typically, the influence of a node and/or the reward for a node depends on one or more non-proof-of-work sybil defence factors. Examples of such factors include: proof of stake, proof of activity; proof of storage; proof of capacity; proof of burn; proof of history; proof of replication; proof of space time; and proof of authority. Numerous other sybil defence factors are known in the art (where sybil-defence factors are features that provide protection from sybil attacks). The influence of a node typically depends on at least one proof of work problem and at least one other sybil-defence factor. This other sybil-defence factor may be associated with the blockchain 10 and/or may be associated with a further blockchain.

Equally, the parameter and/or the influence of a node at a given point in time may depend on a single solution to a proof of work problem. For example, the first node providing a solution to any of the proof of work problems may be determined as the proposer of a block of the blockchain 10 regardless of which of the proof of work problems they have solved.

Where the parameter depends on a single solution, this solution may be required to be for a particular proof of work problem. For example, blocks may be proposed based on an order of proof of work problems so that a solution to the first proof of work problem enables a node to propose an nth block and a solution to the second proof of work problem is then required to propose an (n+1)th block. The order of solutions required may be predetermined or may be pseudorandom; for example, the required solution (e.g. the proof of work problem for which a solution is required) for the (n+1)th block may depend on the nth block.

The parameter may also depend on a difficulty of the proof of work problem and/or the solutions. Where one of the proof of work problems is deemed to be more difficult than another of the proof of work problems (e.g. where the average solution time is smaller), a larger reward and/or influence may be awarded for a node providing a solution to this problem.

Typically, the difficulty of each of the proof of work problems is adjustable. Using Bitcoin as an example: in Bitcoin the number of leading zeros required for a solution is regularly adjusted based on the average solution time over a preceding period (with Bitcoin this number of leading zeros is adjusted approximately every two weeks). The proof of work problems of the present disclosure may be similarly adjusted to maintain a desired difficulty and/or to maintain a regular difficulty.

Typically, the difficulty of each of the proof of work problems is continuously, regularly, and/or periodically adjusted so that (in the long term) 1/w of the total fees for participating in the addition of blocks to the block chain are rewarded for solving any one of the w proof of work problems.

In various embodiments:

- The difficulty for each proof of work problem is adjusted such that the expected interval between the addition of blocks is and/or tends towards a desired time (e.g. an addition interval of ten minutes).

- Where a blockchain that uses a time to drain mechanism is used (e.g. a Graphchain-like protocol), the rate of drain for each proof of work problem can be adjusted to be 1/w of the total rate of drain, where the total rate of drain is chosen in order to target the desired time to drain. A time to drain mechanism is explained in more detail in "Blockchain-Free Cryptocurrencies: A Framework for Truly Decentralised Fast Transactions. Boyen et al. (2016) https://eprint.iacr.org/2016/871.pdf".

- The probability of being eligible to participate in the addition of a block may be dependent on solutions to the proof of work problem being provided; where a proposer of a block (or a participant in the addition of a block) is selected based on the solutions provided. This may comprise the participant being selected based on a determined devoted computational power, which computational power is determined based on the submission of solutions to the proof of work problems (and each proof of work problem may require a different computational power to find a solution). The probability of being selected may depend on the computational power devoted to each of the solutions (e.g. on the average devoted computational power per solution) or may depend on the computational power devoted to a subset (e.g. one) of the proof of work problems. This subset of problems may be selected pseudo-randomly (e.g. the subset for the nth block may depend on a feature of the (n-1)th block or in a predetermined order.

Solutions (or proofs of solutions) may be submitted in a header of a block and/or in the body of a block. For example, a solution may be transmitted as part of a transaction in a block.

Solutions may be determined using a smart contract, where solutions are transmitted to the smart contract and the smart contract is arranged to determine a number of solutions and/or a computational power related to the solutions.

Similarly, a share verification contract may be used, where proof that a node has calculated a solution is supplied in the form of a share verification contract (SVC). As an example, a share verification contract may comprise a smart contract which can verify the validity of a group of proofs and/or solutions submitted to the contract (verification may be probabilistic). Here, the requirement is that it should not be possible, on average, to profit from submission of invalid solutions. In this context, validity of a solution typically requires that:

- The solution corresponds to one of the proof of work problems.

- The solution meets a target difficulty;

- The solution is not a duplicate of a previously submitted solution.

SVCs are explained in more detail in "Loi Luu, Yaron Velner, Jason Teutsch, and Prateek Saxena. Smartpool: Practical decentralized pooled mining. In 26th {USENIX} Security Symposium ({USENIX} Security 17), pages 1409 - 1426, 2017".

Typically, the factor for a proof of work problem comprises the determination of a number of solutions, an average number of solutions, and/or a moving average of the number of solutions submitted by a node. For example, the factor may depend on solutions provided since the addition of the previous 100 blocks, the previous 50 blocks, and/or the previous 20 blocks. The use of a moving average (e.g. a number of solutions or an average number of solutions provided over a rolling window of blocks) has a number of benefits: it prevents new entrants from rapidly gaining a large share of the total number of solutions, it does not penalise nodes who are having a short unfortunate streak (e.g. in some cases a node will not find a solution for a while despite devoting a significant computational power); and it rewards long term commitment to the blockchain 10.

In some embodiments, the criterion for when a block is considered confirmed is chosen in order to protect against the possibility that one node has made a secret advance in relation to one or more of the proof of work problems. For example, rather than simply requiring a certain number of confirmations, a node may require confirmations relating to solutions for a plurality of proof of work problems, thereby rendering it far more challenging for a malicious node that has gained a significant advantage with respect to a single proof of work problem to take control of the blockchain 10.

In this regard, nodes typically consider a block to be confirmed when it has reached a certain probability of finality, e.g. when the probability of this block being included in an eventual longest fork of the blockchain has reached a certain level. This is typically related to a block having reached a certain depth in the blockchain; for example, with Bitcoin a block that has reached a block depth of six (e.g. a block with six confirmations) is typically considered sufficiently final for everyday transactions. According to the present disclosure, the sufficient probability of finality may depend on the proof of work problems related to blocks that have been added to the blockchain. For example, where each block is added based on the solution to a single proof of work problem (e.g. where an nth block is added based on a solution to a first problem and an (n+1)th block is added based on a solution to a second problem), a node may require blocks based on solutions for at least two different proof of work problems to be added to the blockchain in order to consider a block sufficiently final. So where an nth block is added to the blockchain, a node may require a subset of the (n+1)th to (n+6)th blocks to be based on solutions for at least two different proof of work problems.

Generalising, a node may require that a given sequence of $\varsigma$ blocks relates to at least z proof of work problems. Using large values of z (and/or z/$\varsigma$) provides certainty that a subset of proof of work problems are not over-represented on the blockchain 10.

To achieve this, the blockchain may be configured so that a certain proof of work problem (or a subset of proof of work problems) can only be referenced with a certain frequency. For example, where the addition of blocks to the blockchain 10 relies on a solution to one of the proof of work problems being provided, the blockchain may be configured so that solutions to different proof of work problems are required for a given group of blocks. For example, a solution to the first proof of work problem may be acceptable only for two spaced blocks (e.g. not for two blocks in a row) and/or for only three in every ten blocks (or more generally, y in every $\varsigma$ blocks). A node may reject a block if it references the same proof of work problem as its immediate ancestor (e.g. if the nth block references the same proof of work problem as the (n-1)th block).

If each block is added to the blockchain based on a solution to a single proof of work problem, a node that discovers an efficient way to solve this proof of work problem (e.g. an improvement in hardware or software) could generate a number of blocks at a negligible computational cost. This could lead to the advantaged node receiving a substantial portion of the block rewards (or participating in the addition of a substantial number of blocks) with potentially negligible running costs. The work corresponding to this problem would then add nothing meaningful to the consensus - and this may not be easy to detect, particularly if the node in question acts to conceal their advantage.

In this situation, where each block is added to the blockchain based on a solution to a single proof of work problem, nodes need not attempt to find solutions to each problem, and could even specialise in finding solutions a single problem. Therefore, nodes will be able to opt-out of finding solutions to proof of work problems which they find less profitable. This can result in certain proof of work problems being focused on less, and the likelihood of a hidden optimisation to these problems being more likely. In particular, where fewer nodes are attempting to find solutions to a certain problem it is more likely that a single node finds (and hides) an efficient algorithm (or an efficient piece of hardware) for solving the problem. Where many nodes are attempting to find the solution it is more likely that a plurality of nodes will find the efficient algorithm or hardware, and one of these nodes will share the algorithm or hardware.

Therefore, the parameter (and/or the influence and/or the reward) for a node is typically dependent on a plurality of proof of work problems, either in the short term or the long term. This encourages nodes to devote computational power to a plurality of proof of work problems. The parameter may be determined in a way that incentivises nodes to target factor parity, e.g. where the computational power devoted by a node to each proof of work problem is the same. In some embodiments for each block there may be considered only a single proof of work problem; however, for a plurality of blocks there is typically considered a plurality of proof of work problems.

The parameter is typically a function of factors relating to a plurality of proof of work problems. These factors may relate to a number of solutions submitted by a node for each of the proof of work problems and/or a difficulty relating to the solutions.

In equation form, this can be stated as:

$$P^i = f\left(a_1^i, a_2^i, \dots, a_w^i\right)$$

Where:

$P^i$ is the parameter for a node i;

$a_q^i$ is a factor for the node i relating to a proof of work problem q; and

there are w relevant proof of work problems.

Typically, the factors are normalised so as to be between 0 and 1. For example, the factor for a problem may be equal to a number of solutions provided by a node for this problem divided by the number of solutions provided by all nodes for this problem (which value will always be between 0 and 1). It will be appreciated that wherever a factor is mentioned in this disclosure, the related teaching extends to/covers the use of a normalised factor. Typically, the function is a symmetric function of the factors.

The parameter is typically dependent on the distribution of a node's factors and/or normalised factors. For example, the parameter may vary in proportion to a measure of the centre of the distribution of a node's factors. The parameter may depend on the mean, median, or mode, of a node's factors. Furthermore, the parameter may depend on the dispersion of the factors and/or the variance of the distribution of factors, e.g. the parameter may depend on a standard deviation, an interquartile range, a kurtosis, and/or a skew of the distribution. Typically, each node's parameter is dependent on both the mean and the standard deviation of their factors, where typically a higher mean leads to a higher parameter and a smaller standard deviation leads to a higher parameter. In some implementations, the parameter for a node varies in proportion to the mean of a distribution of that node's factors and in an inverse proportion to the standard deviation of a distribution of that node's factors.

In some embodiments, $P^i \propto \frac{\mu^i}{(1+k^i)}$, where $\mu^i$ is the average (e.g. the mean of the factors) of the factors of node i and $k^i$ is a value relating to the dispersion of the factors of node i (e.g. the variance or standard deviation of the factors).

A number of other relationships between the parameter and the factors are possible, for example in various embodiments:

- $a_1^i + a_2^i + \ldots + a_w^i = constant$ or $\sigma_1 a_1^i + \sigma_2 a_2^i + \ldots + \sigma_w a_w^i = constant.$ For example, where a node has a constant amount of computational power, the node is not able to increase the sum of their factors by redistributing this power. The factor modifiers $\sigma$ may be arranged to ensure this is true, for example $\sigma$ may be related to the computational power required to find a solution for each of the problems, e.g. $\sigma$ may be the reciprocal of the average number of solutions per unit time. The node may, however, be able to increase the value of the parameter by redistributing this power. Here, the sum may be a sum of cost per unit time for working on the proof of work problems.

- The parameter is maximised when $a_1^i = a_2^i = \ldots = a_w^i.$ For example, the parameter (e.g. a mining reward) may be maximised when a node devotes equal amounts of computing power to each proof of work problem.

- $P^i \propto min(a_1^i, a_2^i, \ldots, a_w^i)$ or $P = min(a_1^i, a_2^i, \ldots, a_w^i).$ For example, the parameter may be determined based on the proof of work problem with the minimum devoted computing power. This discourages nodes from ignoring any of the proof of work problem.

- When all arguments are equal $P \propto a_1^i(\propto a_2^i, \ldots, \propto a_w^i)$ or $P^i = a_1^i(= a_2^i, \ldots, = a_w^i).$

- $P^i \propto (a_1^i \cdot a_2^i \cdot \ldots \cdot a_w^i)^{\frac{1}{w}}.$ For example, the parameter is dependent on the computing power devoted to each problem; this may enable a node to focus on (or neglect) a problem based on their abilities without the related parameter becoming negligible and may be particularly useful where certain problems require specialist hardware and/or software.

- $P^i = f(a_1^i, a_2^i, \ldots, a_s^i),$ where s < w. The parameter may be dependent on a subset s of the proof of work problems, where a node may then be able to disregard one (or more) of the proof of work problems. The parameter may, for example, be dependent on the s problems for which a node has the highest factors. This arrangement can be beneficial where the proof of work problems require differing hardware and/or different expertise. Nodes may then be able to focus on proof of work problems that they can solve efficiently. By requiring groups of blocks of the blockchain to depend on a plurality of problems, it can still be ensured that a node cannot take control by optimising on a single problem or a small subset of the problems.

- $P^i = f(\bar{a}_1, \bar{a}_2, \ldots, \bar{a}_w)$, where $\hat{a}_q$ is a normalised factor relating to a proof of work problem q, e.g. $\bar{a}_1^i = \frac{a_q^i}{\Sigma_j a_q^i},$ where $a_{q,i}$ is a factor relating to the computational power devoted to a proof of work problem q by a node i, $a_q^j$ is a factor relating to the computational power devoted to the proof of work problem q by a node j, and $\bar{a}_q^j$ is a normalised factor relating to the proportion of total computational power devoted to the proof of work problem q by the node i. Basing the parameter on normalised factors can be used to ensure that nodes devote a substantial proportion of the entire devoted computing power to each proof of work problem. It will be appreciated that the use of normalised factors may be combined with any of the other options disclosed herein, e.g. the parameter may be determined using the equation $P^i \propto min(\bar{a}_1, \bar{a}_2, ..., \bar{a}_w)$.

- The parameter may depend on a plurality of functions, where each function depends on one or more group of work problems, e.g. $P^i = f(g(a_1^i, a_2^i), h(a_1^i, a_3^i))$. Each of the functions may depend on different factors, or the functions may depend on one or more of the same factors. The use of different functions enables different factors, and different combinations of factors, to affect the parameter differently. For example, each function may refer to a different type of problem, where each node may be able to focus on a subset of types (e.g. solve a plurality of proof of work problems of a single type) or each node may be required to devote computational power to a variety of types of problems. Similarly, each function may relate to a different blockchain. This enables a node to benefit from activity on another blockchain, where different blockchains may provide different effects. For example, adding blocks to a second blockchain may increase the probability of a node being selected as a proposer of a block of the blockchain 10; holding a deposit in relation to a third blockchain may increase the reward for the node for proposing this block.

- In some embodiments, a factor on which the parameter is dependent is related to a second blockchain; for example, the factor may relate to the amount of computational power devoted to a proof of work problem associated with the second blockchain. Equally, the parameter may depend on a second parameter, which second parameter relates to the second blockchain. There may be a plurality of parameters determined for a plurality of related blockchains on which a node is active, where each parameter may depend on one or more of the other parameters.

Typically, $\hat{P}^i = \frac{P^i}{\sum_j P^j}$, where $P^i$ is the parameter for a node i, $P^j$ is the parameter for a node j, and $\hat{P}^i$ is a normalised parameter for the node i. Typically, this normalised parameter is the parameter that relates to the influence of the node on the consensus mechanism.

In other words, the influence of the node typically relates to solutions to the first and second proof of work problems that have been provided by the node and also solutions to the first and second proof of work problems that have been provided by other nodes. In an example, the probability of a node being selected as a block proposer (either for a single block in the short term or for a number of blocks in the long term) may be proportional to the number of solutions they provide (or more generally the amount of computing power they devote) relative to the number of solutions provided by other nodes.

As mentioned above, different components of the influence may depend on different proof of work problems. Therefore, there may be determined a plurality of parameters that determine these different components. Equally, the parameter may be a tuple, vector, and/or matrix, with different elements of the parameter determining the different components of influence. For example, the parameter may be determined as: $P(c_1, c_2, ..., c_\zeta) = f(a_1, a_2, ..., a_w)$, where $c_1, c_2, ..., c_\zeta$ are various components of the influence and/or the reward.

As mentioned above, the parameter for a node i may be dependent on the parameters of the other nodes of the blockchain 10. For example, the parameter may be determined using the equation:

$$P^i = \frac{\beta^i}{\sum_j \beta^j}$$

Where

$P^i$ is the parameter for the node I;

$\beta^i$ is a variable relating to the node i; and

There are j nodes of the blockchain.

In various embodiments:

- $\beta^i = f(a_1^i, a_2^i, ..., a_s^i)$ or $\beta^i = f(\bar{a}_1^i, \bar{a}_2^i, ..., \bar{a}_s^i)$. It will be appreciated that any of the functions mentioned below may relate to factors or normalised factors and may relate to a subset of the factors or all of the factors (e.g. s = w or s < w).

- $\beta^i = \min(a_1^i, a_2^i, ... a_s^i)$. As described above, the parameter may be dependent on the minimum factor for the node. $\beta^i = (a_1^i, a_2^i, ... a_s^i)^{1/s}$.

- $\beta^i = f(k^i)$, where (as described above) k is a measure of the dispersion of the factors of node i. For example, k may be the variance or standard deviation of the factors of node i.

- $\beta^i = \frac{1}{w}\sum_{q=1}^{w} a_q^i * f(k^i)$ or $\beta^i = \frac{1}{w}\sum_{q=1}^{w} a_q^i * \frac{1}{1+k^i*\sqrt{\frac{1}{w}\left(\sum_{x=1}^{w}\left(\frac{1}{w}\sum_{q=1}^{w} a_q^i - a_x^i\right)^2\right)}}$. With this example, $\beta^i$ varies in proportion to the mean of a node's distribution of functions and inversely with the standard deviation of a node's distribution of functions.

In some embodiments, the parameter is dependent on one or more scaling factors, which scale the factors relating to the proof of work problems. Therefore, providing an additional solution for the first proof of work problem may increase the parameter more than providing an additional solution for the second proof of work problem. Scaling factors may be used to encourage nodes to work on a subset of the proof of work problems (and/or to ensure that each proof of work problem has a similar amount of computing power devoted to it - so a scaling factor may be greater for problems that have a lower amount of devoted computational power to encourage nodes to solve this problem). Scaling factors are of particular use when a new proof of work problem is introduced, as the use of scaling factors can encourage nodes to rapidly devote computational power to this new problem.

The scaling factors may be adjustable, for example the scaling factors may be defined in a block of the blockchain (where the factors can then be updated in subsequent blocks). The scaling factors may be adjustable in dependence on the computational power determined to be devoted to each proof of work problem.

The scaling factors may be adjustable by a third party. For example, a third party (such as a research institution) may wish to incentivise the finding of an optimisation to one of the proof of work problems; this can be achieved by increasing a scaling factor for this problem. The use of scaling factors typically encourages all of the nodes to increase the computational power devoted to a certain problem, with the effect that this increase may not move any of the nodes away from factor parity (but it may still move nodes away from cost parity).

By determining the parameter based on factors for a plurality of proof of work problems, a node is incentivised to devote computational power to each of the proof of work problems. However, if a node discovers a significant optimisation with respect to one of the problems this node might still be able to increase their factor for that problem without devoting a substantial amount of computing power to the problem. This would enable the advantaged node to devote their computing power almost entirely to the other problems (and to potentially gain a large influence over the blockchain 10).

Furthermore, since the factor for each node typically depends on the other nodes (e.g. the factor may depend on the number of solutions provided by a node relative to the number of solutions provided by all the nodes), a node that is able to increase their factor for one of the problems is typically able to decrease the factor of the other nodes. Therefore, the first node to discover an optimisation could drive an excessive fraction of total cost into the factor for which they have an optimisation (e.g. in an extreme case the first node could use only a small amount of the first node's computing power to effectively force all other nodes to devote almost the entirety of the other nodes' computing power to solving the optimised problem).

Therefore, in some embodiments one or more of the following features is implemented:

- For one or more of the factors, there is a maximum (threshold) value. For example, devoting computational power beyond this maximum value or providing more solutions than this maximum value does not increase the parameter.

- There is a limited set $A_*$ of factors (and/or normalised factors) that a node can raise to be their highest factor. For example, a node may be able to raise $a_1$ or $a_2$ to be their highest factor, but not $a_3$. This set may be determined based on those factors relating to problems which are considered particularly non-optimisable. The set $A_*$ may include one or more of:

◦ The entire set of factors.

◦ A factor with a lowest computational cost (this encourages the raising of this factor).

◦ A set of b factors with the lowest computational costs.

◦ All but the factor with the highest computational cost.

◦ All but a set of b factors with the highest computational costs.

- The only factor that a node can raise to be their highest factor is a factor determined by other nodes or parties, e.g. the factor may be designated by continuous popular vote. This determination may, for example,

◦ Occur via a rolling popular vote. For such a vote, the number of votes for each node may depend on that node's parameter, on one or more of that node's factors, or on a deposit relating to that node.

◦ Depend on an external price feed, for example external parties may be able to bid on the factor, where this effectively enables external parties to offer rewards for solving a particular proof of work problem.

◦ Depend on transactions recorded on the blockchain and/or previous solutions provided in relation to the proof of work problems.

- There is a threshold value for the amount by which a node can raise a factor. This threshold may be relative to other factors; for example, the node may only be able to raise a highest factor to be 10% greater than a second highest factor.

- There is a threshold value for the amount by which a node can raise a factor in a given period. For example, the node may only be able to raise any factor by 10% in a 24 hour period'; typically, the period is based on a number of blocks of the blockchain (e.g. the node may only be able to raise any factor by 10% per block).

- There is a threshold discrepancy (or disparity or non-parity) between the various factors and/or normalised factors. For example, the possible discrepancy between a node's highest and lowest factor may be a maximum of 10%, or the discrepancy between a node's highest and average factor may be a maximum of 10%. Anything above this threshold discrepancy may be ignored (e.g. if a node has a first factor $a_1$ = 0.5 and a second factor $a_2$ = 0.9, the parameter for this node may be determined using the effective factors $a_{1,eff}$ = 0.5 and $a_{2,eff}$ = 0.55).

- If any of these thresholds is exceeded, then the excess above the threshold may redistributed between the other nodes. For example: if node i were to attempt to raise the value of their highest factor to be 20% greater than the value of their second highest factor, they may only benefit from a 10% raise with the other 10% being distributed among (and raising the factors of) other nodes so that the node i is effectively helping out their competitors. This excess may be distributed proportionally or *pro rata* among the other nodes, so that each other node's normalised factors are typically not substantially altered.

- Where there is a limitation placed on the raising of a factor, this limitation may only affect an active raise, where a node takes action to raise that factor. A passive raise, where the factor rises because of the actions of other nodes (e.g. because other nodes cease work on a proof of work problem) may not be affected by the above limitations.

- New nodes who are providing solutions to any of the proof of work problems are required to enter at parity, where their factors are the same for each of the proof of work problems.

Typically, there is a stepped (e.g. two-stepped), gradual, or exponential penalty for deviating from parity. In this way a small deviation from parity (e.g. as may be caused by other nodes rebalancing their factors) does not unduly punish a node. However, if a node seeks to rapidly rebalance their own factors (e.g. to drive down the factors of other nodes as described above), this node will be heavily penalised. As an example, the determination of the parameter for each node may be dependent on a variable $\delta$ relating to a discrepancy between the parameters of that node. This discrepancy may be, for example, the discrepancy between the highest and lowest factors of a node $(\delta = \frac{a_{max}}{a_{min}})$, or

the discrepancy between the highest and average factors of a node $\left(\delta = \frac{a_{max}}{a_{ave}}\right)$. The parameter may be dependent on a function of this variable (e.g. $P \propto f(\delta)$ or $P \propto f(\delta^2)$).

Typically, the first step of the penalty is a soft penalty, e.g. a reduction in the parameter for a node. Typically, the second step of the penalty is a hard penalty, e.g. the excess of a factor is not taken into account for the determination of a parameter and/or the excess is redistributed amongst the other nodes. In a simple practical example, a node that has a disparity $\delta$ of 1.05 may receive a 5% reduction to their parameter; a node that has a disparity $\delta$ of 1.15 may receive this 5% reduction and may also have 10% of their highest factor redistributed amongst the other nodes.

In some embodiments, nodes can take turns to effect changes to their levels of factors. For example, it may be that there are time slots allocated to nodes in sequence, within which the node may apply any change, and have this change reflected in the effective values of their factors. Similarly, nodes may be able to vote on features of the factors; for example, nodes may be able to vote on which factor can be the highest factor of any of the nodes. This vote may occur in each block, for example nodes that validate the block may add a vote to the block during the validation. The validators may be selected on a rotating basis to ensure that each node can periodically update their vote.

Typically, the parameter for a node is arranged to increase as the node devotes additional computing power to the proof of work problems. Typically, the parameter for a node is arranged to decrease as the node deviates from factor parity (e.g. deviates from having equal normalised factors and/or deviates from devoting equal amounts of relative computational power to each problem; relative computational power being computational power relative to the other nodes).

Based on the above features, where a vote occurs:

- economically rational nodes will vote for the factor that can be raised to the highest value to relate to the proof of work problem that has the lowest cost (for that node) to maintain parity. This parity may relate to factor parity, where each factor has the same effect on the parameter, and/or cost parity, where the cost to the node of raising any factor is the same.

- When all of the proof of work problems have the same cost to maintain parity (for each node), this selection will cycle through the proof of work problems, with the effect that parity is maintained to a close approximation.

- Typically, the implementation of a threshold does not in practice restrict a node's ability to raise their factors to any desired level (so long as this node maintains parity between the factors). It simply restricts the amount by which any one of these factors can be raised in a single period.

- Nodes are typically able to increment their factors individually (albeit with restrictions, and in a sequence that is decided by vote as opposed to being solely the choice of the incrementing node); this ensures that the costs associated with maintaining parity remain tend to be distributed evenly between each proof of work problem.

The above features are useable to prevent a node from greatly increasing a single factor to the detriment of other nodes. This increase might be expected where a node has found an optimisation for one of the proof of work problems and decides not to share that optimisation. It can be desirable to be able to identify such a situation.

When a first node identifies an optimisation to a proof of work problem, it is in their interest to increase the number of solutions they are providing for this problem. Even if the first node is prevented from raising their factor for this problem above a certain threshold (as described above), it benefits the first node to do this, since this will result in each other node needing to submit more solutions in order for these other nodes to maintain their normalised factor $(\overline{a}_q)$ for this proof of work problem. Essentially, the first node can submit further solutions at a low computational cost, whereas for other nodes to submit a proportional number of solutions they must devote a higher computational power to finding these solutions. This uses up computational power that these other nodes would otherwise devote to the other problems.

To do this, a first node i that has found an optimisation for a proof of work problem q may perform the steps of:

1. Rebalancing their factors to as to raise value of $\lceil \overline{a}_q^i \rceil$ to the threshold value.
2. Waiting until other nodes have rebalanced their devoted computational power to return to parity of all factors. In other words, until other nodes have increased the amount of computational power they are devoting to the problem q (so that these other miners achieve parity). A side effect of the other nodes rebalancing their own factors will be a decrease in the factor $\lceil \overline{a}_q^i \rceil$ of the first node.

Each round of this process will increase the computational cost of increasing a factor for the proof of work problem q and lower the computational of the cost of increasing a factor for any of the other proof of work problems (since the other nodes will have removed computational power from these other problems in order to devote more computational power to problem q).

At least while the costs of maintaining levels of each factor are similar, each of the other nodes will in general rebalance their factors in order to maintain factor parity, since, as described above, typically there is a penalty (e.g. a decrease in the parameter) for not maintaining parity between factors and/or normalised factors.

This rebalancing performed by the other nodes offsets the initial increase in the factor achieved by the first node and enables this first node to again rebalance their factors to raise the value of $\bar{a}_q^i$ to the threshold value (again, bearing in mind that since the first node has discovered an optimisation for the problem q, the cost for this first node to raise the factor $\bar{a}_q^i$ is less than the cost for other nodes to similarly raise this factor).

In the long term, there will come a point where the degree to which the other nodes have to lower their other factors to achieve parity is so great that the reduction in their parameter due to not achieving parity is less than the reduction in their parameter from the reduction in total solutions provided. In an extreme example, the first node that has found an optimisation to the problem q may keep submitting solutions to the problem q (using the process as described above) until each other node is devoting 99% of their computational power to this problem simply to maintain parity. In this example, these other nodes may eventually decide to focus on other problems and accept that they cannot compete for problem q; this decision will occur when the opportunity cost of devoting computational power to another problem exceeds 0 (e.g. when the penalty for not achieving parity is less than the additional reward for submitting additional solutions to other problems).

At this point, the only way that the first node can profit further from their optimisation to make it publicly available (e.g. in return for a usage/licence fee). Therefore, in the long run, nodes are incentivised to share optimisations.

Once the optimisation is generally available there will follow a period of growing adoption (assuming the advantage over the previous best method is significant, and that any fee payable for using the optimisation is not too high).

Initially, a node that gains access to the optimisation will be able to use this optimisation to boost their profit by reducing the computational cost devoted to the related factor (since they can provide the same number of solutions for a lower computational cost).

Equally, redeploying the saved computational power would enable this node to boost the levels of all of their factors.

Each miner that obtains the optimisation will be incentivised to repeat the process described above, where they maximise the total computational power devoted to the corresponding problem.

The point at which it is no longer in the interests of one of the other nodes (e.g. a node without access to the optimisation) to return to parity depends largely on the penalty for deviating from parity, where a smaller penalty will of course lead to the nodes deviating from parity sooner.

However, if this penalty is too small, then nodes are not sufficiently incentivised to maintain parity. Therefore, even when all nodes have access to an optimisation, the network could (for example) get "stuck" in a state where solutions to the optimised problem are being submitted at about the same rate as before the optimisation (but at significantly lower cost); this is undesirable, since it reduces the incentive to seek further optimisations;

If this penalty is too large, then the first node to discover an optimisation could drive an excessive fraction of total cost into the factor for which they have an optimisation (e.g. the first node could use only a small amount of the first node's computing power to effectively force all other nodes to devote almost the entirety of the other nodes' computing power to solving the optimised problem). This would leave the first node free to increase their factors for the other problems at a low cost and to potentially take control of the blockchain 10.

The process described above also depends on the discrepancy/disparity threshold, e.g. the maximum allowable discrepancy between factors.

If this threshold is too small, then nodes that discover an optimisation are not able to increase their factor for the problem relating to this optimisation substantially and so cannot drive the proliferation of this optimisation (so that other nodes use the optimisation to increase the computational power devoted to the related solution). The network could then get stuck in the state mentioned above, where solutions to the optimised problem are being submitted at about the same rate as before the optimisation (but at significantly lower cost).

If this threshold is too large, then the first node to discover an optimisation will be able to rapidly raise their factor for this problem and thereby rapidly raise their parameter. This may enable this node to exert an undue influence on the blockchain 10.

In order to determine a suitable value for the non-parity penalty, the following equation may be used (though it will be recognised these values may also be determined/set in other ways):

$$k = \frac{1}{Q} \cdot \frac{\frac{c_q}{\langle c_{\bar{q}} \rangle} - 1}{1 + \frac{c_q}{\langle c_{\bar{q}} \rangle}} \tag{1}$$

Where:

$c_q = g_q a_q$, $g_q$ is the unit cost for altering factor $a_q$, which factor relates to a proof of work factor q.

$\langle c_{\bar{q}} \rangle = \sum \frac{c_n}{w-1}$ *for n* = 1, ... , *w, excluding* n ≠ q, so that $\frac{c_q}{\langle c_{\bar{q}} \rangle}$ gives a value relating to the cost of altering factor $a_q$ as compared to the cost of altering another factor.

$$Q = \sqrt{w - 1} \cdot \sum_{n=1}^{w} \frac{a_n}{w}$$

More generally, the disparity penalty for a node may be based on one or more of:

- A magnitude of a discrepancy of a factor from parity.
- The cost of altering a factor that differs from the node's average factor.
- The factors of other nodes.

An example of the use of a threshold discrepancy can be described by considering a redistribution algorithm based on the equation $\alpha < \frac{\bar{a}_{max}}{\bar{a}_{min}}$, where $\alpha$ is a maximum allowable factor discrepancy (so that $\alpha$ > 1).

Where there exists a node with a value of $\frac{\bar{a}_{max}}{\bar{a}_{min}}$ that is greater than $\alpha$, the excess may be ignored (e.g. any factor that has a value of greater than $\alpha \cdot \bar{a}_{min}$ may be taken as $\alpha \cdot \bar{a}_{min}$ for the purposes of calculating the parameter of this node.

In some embodiments, this excess is instead redistributed (typically proportionally) among the remaining nodes, e.g. using the equation:

$$\Delta \bar{a}_q^i = \left( \bar{a}_q^j - \alpha \cdot \bar{a}_{min}^j \right) \cdot \frac{\bar{a}_q^i}{\sum_{\tau \neq j} \bar{a}_q^\tau}$$

This equation describes the redistribution from a node j to a node i where there are $\tau$ nodes for the system.

It will be appreciated that a node may have multiple factors $\bar{a}_q^j$ that are redistributed. Proportional redistribution ensures that nodes with high factors are not penalised when another factor exceeds the discrepancy threshold (as would occur if the factor was distributed equally among all nodes).

This redistribution may lead to the factor for another node exceeding the discrepancy threshold, so this redistribution process may be repeated for other nodes (typically this process is iterative, moving from the nodes with the highest initial discrepancy to that with the lowest discrepancy).

Using such an equation, a node that attempts to hoard an optimisation in order to increase a single factor by a substantial amount is penalised; therefore, there is an incentive for this node to instead share the optimisation (and potentially gain licence fees as described below). In practice, $\alpha$ may be less than or equal to 1.01, less than or equal to 1.05, less than or equal to 1.10, and/or less than or equal to 1.25.

In some embodiments, a penalty is selected that enables nodes to deviate from parity for one factor when the total amount of computational power in the system exceeds a certain amount for that factor (where this total computational power may be estimated using submissions from nodes).

One use of the above methods is to encourage nodes to share an optimisation for any of the proof of work problems. In this regard, a node that discovers such an optimisation has two options:

1. Retain the optimisation: the optimisation is not made generally available, but instead is used by the discovering node in order to increase their profit.

2. Share the optimisation: The node shares the optimisation, possibly for licence fees charged for the right to solve the proof of work problem using the advance.

A method for encouraging the sharing of an optimisation is now described by considering a system with w proof of work problems, $\lambda$ total available reward, and $c_x^i(t)$ being the computing power devoted by a node i to a proof of work x at a time t. $C^i(t) = \sum_x c_x^i(t)$ is the computing power devoted by the node i to all factors at the time t. $r^i(t)$ is the fraction of the total reward earned by the node i at time t (and this reward typically relates to the parameter $P^i(t)$ for the node).

Using these definitions, it can be stated that:

$$C^i(t) = \left(1 - q(t)\right)\lambda r^i(t) \qquad (2)$$

Where q(t) is a profit margin for the node.

The total profit generated by all of the nodes is then equal to:

$$\Psi(t) = \sum_j \psi^j(t) = \lambda - \sum_j C^j(t) \qquad (3)$$

Where $\Psi(t)$ is the total profit generated by all nodes and $\psi^j(t)$ is the profit generated by a node j.

The total profit minus the profit of the node i is then equal to:

$$\Psi(t) - \psi^i(t) = q(t)\lambda\left(1 - r^i(t)\right) \qquad (4)$$

Assuming the node i obtains an infinite optimisation for a single proof of work problem, and that the computing power saved by this node is redistributed equally between all of the other proof of work problems, the increase in the node i's fraction of total profit from retaining the optimisation is:

$$r^i(t + \delta) - r^i(t) = \frac{(r^i(t) - 1)^2 r^i(t)}{w - (r^i(t) - 1)^2} \qquad (5)$$

In order to encourage the sharing of the optimisation, the present disclosure considers the use of a licence fee. For example, the node that discovers an optimisation may be able to share the optimisation in return for a payment from other nodes (e.g. from other nodes that utilise this optimisation). This may be implemented using a smart contract, where a node providing an optimisation to the smart contract receives a portion of future rewards based on the optimisation (e.g. in proportion to a decrease in solution time to the optimisation).

Assuming that the advantaged node can charge a fraction 1/g of the total of all other nodes' profits as a licence fee, the condition for it to be more profitable to share than retain the optimisation is:

$$r^i(t + \delta) - r^i(t) < \frac{\Psi(t) - \psi^i(t)}{\lambda g} \qquad (6)$$

*given $r^i(t) < 1/2$, this leads to the equation:*

$$w > \left(1 - r^{i(t)}\right)^2 + \frac{g}{q(t)} \cdot \left(1 - r^i(t)\right)r^i(t) \qquad (7)$$

*Assuming* $\frac{g}{q(t)} \gg 1$, this gives:

$$w > \frac{g}{4q(t)} \qquad\qquad (8)$$

From the above equations it can be seen that a smaller share of the other nodes' profits being provided as a licence fee (i.e. a larger g) implies a tighter bound (e.g. a higher required number of proof of work problems) - because a smaller licence fee means less incentive to share the advance. A smaller profit margin $q(t)$ also means a tighter bound, since there are fewer profits to appropriate as a license fee. For given values of g and q, a larger w makes the condition easier to satisfy so that using a larger number of proof of work problems decreases the licence fee required for the optimisation of a single proof of work problem. Intuitively, this is because g scales sub-linearly with w, in fact, typically g is expected to be approximately constant for large w.

A substantial optimisation in a proof of work problem (whether an improvement in software or hardware) would effectively be compulsory to implement, in the sense that a node could not continue to operate on a commercial basis, if a majority of other nodes were to utilise the advance, and they did not. Due to this, the licence fee may be taken from all nodes following the provision of an optimisation based on the justification that these nodes will utilise the optimisation. In practice then the value of g may be greater than or equal to three, greater than or equal to five, greater than or equal to ten, and/or greater than or equal to twenty, where this value of g may be defined and/or enforced by a smart contract.

Typically, the reward for publicising the optimisation is related to the blockchain 10. In particular, the reward may be one or more of: a token relating to the blockchain (e.g. an amount of Bitcoin); a factor that affects the determination of the parameter; and/or an increased probability of being selected to participate in the addition of blocks to the blockchain.

In a practical example, if $q(t) = 0.1$, and $g = 10$, the required condition for w is $w > 25$.

The number of proof of work problems used may be at least ten, at least twenty, at least fifty, and/or at least one hundred.

The reward for providing the optimisation may depend on one or more of: the number of proof of work problems; a decrease in solution time relating to the optimisation; an input from the node providing the optimisation; a number of nodes devoting computational power to a relevant proof of work problem; a value that is recorded on the blockchain and/or a predetermined value.

In some embodiments, one or more of the following features is implemented, which features are particularly useful to encourage the sharing of optimisations:

- Nodes are required to use a specific algorithm and/or specific hardware to determine a solution for a problem. This may be verified by a node providing evidence of intermediate steps and/or intermediate values of the algorithm (e.g. providing a value that is reached after the first step of a three-step algorithm).

- Nodes may be required to submit a declaration to a smart contract regarding the algorithm and/or hardware that they have used. If the node is determined to have lied, then any reward received by that node (e.g. an amount of cryptocurrency) may be confiscated. This may be automatically enforced by enabling other nodes to upload evidence to the smart contract that the node has lied.

- By requiring nodes to specify an algorithm that they are using, licence fees can be automatically deducted. Typically, this deduction occurs in a native token of the blockchain 10. For example, a node that discovers an optimisation may submit this optimisation to the blockchain. Future nodes that use this optimisation may identify their use of the optimisation and this may automatically (e.g. as enforced by a smart contract) result in a portion of a reward for these future nodes being transferred to the node submitting the optimisation. In this way nodes are encouraged to submit optimisations in return for future licence fees. As described above, nodes may be required to provide evidence of an algorithm they are using (as a matter of course and/or on request) such as intermediate values in order to ensure that nodes do not use an optimisation without paying appropriate licence fees. The submission of an optimisation may include the setting of a fee required for use of the optimisation, e.g. this fee may be a percentage of future block rewards. The deduction occurring in the native token can encourage use of the blockchain by those parties discovering optimisations (even if they had not previously been users of the blockchain). This increases the user base of the blockchain, which can provide increased security via decentralisation. Furthermore, the increase in usage of the native token leads to a stabilisation in the price of the token, which is commercially advantageous (and this stability could lead to widespread use of the token in a manner similar to the petrodollar).

- Further to the above, a smart contract may be arranged to require activities outside of the blockchain to result in payments to the node discovering an optimisations (e.g. payments in the token of the blockchain 10). In this regard, optimisations for certain problems (e.g. NP-complete problems) are likely to have uses outside of the blockchain; such uses may require (e.g. via a contract and/or a smart contract) the payment of a fee to the discoverer of the optimisation. In some embodiments, the discoverer of the optimisation is able to submit the optimisation to the blockchain (e.g. as a transaction in the blockchain), where this submission may contain licensing terms for the optimisation. Another user that wishes to use the optimisation for purposes other than solving a proof of work problem may then use the optimisation according to the terms of the submission. Requiring such external uses to require payments in the token of the blockchain 10 increases the stability of the native token (the token of the blockchain), as explained above.

- Any optimisation may be required to be licenced to all nodes at a similar, or the same, cost - this can be enforced through smart contracts. This ensures that smaller nodes are not forced out of the market due to prohibitive licence fees. The fees may be fixed based on a smart contract (e.g. there may be a percentage fee per optimisation increase, so that a node may be required to pay 1% of any future block reward in return for access to a 5% optimisation for a given problem). The fees may depend on the magnitude of the optimisation as well as the number of proof of work problems used. These fees can be fixed before any optimisations have been discovered to avoid arguments when optimisations are discovered.

- Fees may be determined via an auction and/or a Reverse Dutch auction, where bids may be offered using transactions on the blockchain (and smart contracts). This avoids the need to set a licence fee in advance and avoids the discoverer of an optimisation needing to determine an appropriate fee.

- There may be a limited list of useable optimisations and/or rewardable optimisations (e.g. licence fees may only be payable for optimisations on this list). This can avoid unscrupulous parties seeking to benefit by uploading stolen or ineffective optimisations. This list may be selected by consensus, where nodes can vote on which optimisations to include, and/or by usership, where only optimisations that are used by a certain number of nodes are included on the limited list.

- It will be appreciated that optimisations may build on, and/or refer to each other. Therefore, a node may use an optimisation B, which optimisation B is based on a previous optimisation A. In such a case, a portion of the fee for using optimisation B may pass to the discoverer of optimisation A (again, this may be enforced using smart contracts).

- In a practical example, the above features may be implemented using an account on a blockchain, where the account contains a list of submitted optimisations alongside licence fees. A node that wishes to submit a solution to a problem is then able to reference the account and reference an optimisation(s) that the node has used to obtain this solution. If this node is selected as the proposer for a block based on this solution, a portion of their block reward can then be transferred to the node(s) that originally submitted the used optimisation(s). A node that discovers an optimisation is able to submit this optimisation to the account, where it can then be used by, and referenced by, other nodes.

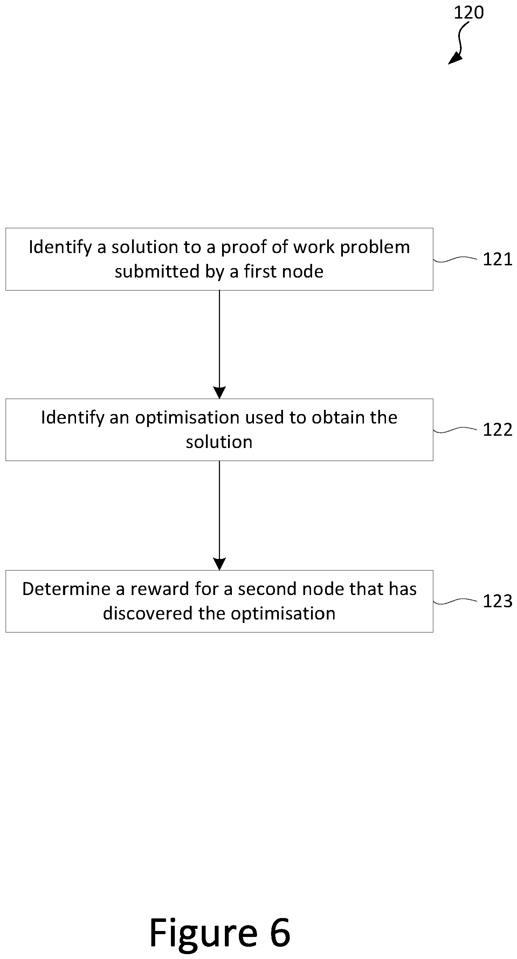

Referring to Figure 6, there is shown a method 120 of determining a reward for a node that has discovered an optimisation. This method is typically carried out by a node of the blockchain 10.
In a first step 121, the node identifies a solution to a proof of work submitted by a first node.
In a second step 122, the node determines an optimisation used by the first node to obtain the solution.
In a third step 123, the node determines a reward for a second node that discovered the optimisation. This reward is typically a portion of a reward that is intended for the first node (e.g. a block reward). Equally, the reward may be a flat fee (e.g. there may be a flat fee payable for each solutions discovered using the optimisation). This reward for the second node can be considered to be a licence fee for using the optimisation. As described above, the reward may be enforced via a smart contract. Typically, the reward for the second node is recorded on the blockchain 10 (e.g. in a transaction in a block of the blockchain).
Methods for determining the optimisation and determining the reward as well as identifying the second node have been described above.
Typically, the problems are arranged so that an output of a node, e.g. a solution provided by a node or an intermediate value provided by a node, can be verified efficiently (e.g. without another node needing to recompute the output). However, in some embodiments, certain outputs may not be efficiently verifiable. In such situations, the following steps may be implemented:

1. A solving node proposes a solution and/or an intermediate value. This solving node may also be required to provide a deposit (e.g. submits a transaction to the other nodes of the blockchain relating to an amount to be held in escrow).

2. A challenging node is able to challenge the solution and/or the intermediate value.

3. One or more judging nodes are able to resolve the dispute (e.g. by submitting votes to a smart contract).

If the judging nodes determine that the solving node has provided an incorrect solution and/or intermediate value, the deposit submitted by this solving node may be confiscated as a penalty.

A more detailed implementation of this method is described in "A scalable verification solution for blockchains. Teutsch and Reitweißner (2014). https://people.cs.uchicago.edu/~teutsch/papers/truebit.pdf".

Verifying an output may comprise one or more of:

- Determining an algorithm that has been used by a node to solve one of the proof of work problems. Typically, this comprises checking one or more intermediate values submitted by a node in relation to a puzzle for one of the problems.

- Checking that a node attempted to solve a certain number or fraction of puzzles. This may comprise the node submitting intermediate values or proofs of computation for puzzles that were not fully solved. This may also comprise determining a number of computational steps performed by a node (e.g. where three steps are required to solve a puzzle, this may comprise identifying whether a node has performed no steps, one step, two steps, or all three steps).

Industries based on new technology are typically more competitive, higher risk, and feature more participants that those based on older technology; one reason is that ability to innovate quickly is a diseconomy of scale Profit margins must be large enough to compensate for the risk that a given company may fall behind in the R&D race. Typically, profit margins will narrow over time as the associated technologies mature, and the pace of advances plateaus, leading in turn to consolidation. For example, as fixed costs become significant compared to profits, and economies of scale increase. This pattern might threaten the security of blockchains as they become more established.

In some embodiments, this threat is mitigated by including one or more of:

- multiple independent technologies used to secure the blockchain 10; in particular the use of multiple types of proof of work problem. As R&D needs to be divided between these multiple problems, the point at which overall progress will plateau is delayed. Furthermore, there is no longer a single point of failure.

- A blockchain for which new proof of work problems can be implemented and/or existing (e.g. defunct) proof of work problems can be retired.

Therefore, a node may be able to provide a new proof of work problem and/or indicate that an existing problem is defunct. This may comprise adding an indicator to a header and/or a transaction of the block. The blockchain may be configured so that nodes are required to determine whether an existing problem has been broken (e.g. by determining that a minimum solution time has been achieved).

In some embodiments, optimisations to proof of work problems can be provided, and/or are required to be provided. This can be implemented using smart contracts. For example, if a node is consistently finding solutions to a proof of work problem more quickly than expected, the node maybe required to provide an optimisation. The penalty for not submitting the optimisation may be a reduction in a factor and/or the parameter and/or a prohibition in the node participating in the building of a consensus on the history of the blockchain 10.

This smart contract may comprise one or more of the variables mentioned above (e.g. the smart contract may include a licence fee). In this way, the node is able to provide an optimisation and gain a guaranteed licence fee based on the smart contract. This licence fee may be related to, and/or proportional to, the improvement of the optimisation over existing solution processes. For example, if a node discovers an algorithm that results in solutions to a proof of work problem being found 10% more quickly (or using 10% less processing power) they may provide this to a smart contract and thereafter receive a licence fee (e.g. of 10% of a block reward) from each of the nodes submitting solutions to this proof of work problem from that point onwards.

It will be appreciated that an optimisation may be a development in hardware or software. For example, the optimisation may relate to a new processor architecture, or a new algorithm.

Conventionally, the possibility of optimisations is seen as an issue for blockchains, since a party that finds a substantial optimisation is able to exert an undue influence over the control of a conventional blockchain. However, the present disclosure not only removes this issue, but in fact turns the possibility of optimisations into a positive feature. The discovery and sharing of optimisations is encouraged, which enables the proof of work problems to be used to address useful problems (e.g. NP-complete problems).

This method of rewarding optimisation may be used in conjunction with problems (e.g. NP-complete problems) for which such optimisation is desirable. For example, this may be used to incentivise optimisations for the travelling salesman problem, where this problem may be used as one of the proof of work problems.

Conventionally, such optimisable problems have not been used for proof of work problems, since conventionally the node discovering an optimisation would have been incentivised to keep this optimisation secret (and that node would benefit from this secrecy). The present disclosure provides a way to discourage keeping an optimisation secret and so enables the use of optimisable problems as proof of work problems.

Not least in order to avoid issues from compounding advantage (e.g. where a node that discovers a first solution for a proof of work problem is more likely to discover a second solution for this same proof of work problem), at least one of the proof of work problems may be arranged to be non-parallelisable and/or to be dependent on recent blocks.

In some embodiments, each of (or a majority of) the proof of work problems are selected to be non-optimisable and/or optimisation resistant. In such a situation, the opportunity cost for each factor is typically the same for each node. Therefore, in such a situation, global factor and cost parity is generally achieved. Furthermore, the risk of a single node discovering and concealing an optimisation is reduced.

In some embodiments, the proof of work problem comprises a verifiable delay function (VDF) and/or a function that requires a plurality of sequential calculation steps (e.g. so that a second step cannot be performed, e.g. a second solution found, until the output of a first step is known). Such a function can be used so that the determination of an output value of the function takes a significant amount of time (whereas the verification of this output value takes a shorter amount of time). As an example, a verifiable delay function may require repeated squaring of an input value. A verifiable delay function is particularly useful for providing a random beacon, since a random number may be generated based on a known input value, where the output value (the random number) cannot be determined for a significant amount of time. During the computation period, parties may guess the random number (e.g. enter a lottery based on the random number).

In some embodiments, the parameter depends on a further sybil-defence factor, such as a proof of stake and/or a proof of activity. Proof of activity blockchains are described in more detail in "Proof of Activity: Extending Bitcoin's Proof of Work via Proof of Stake. Bentov et al. (2014) https://eprint.iacr.org/2014/452.pdf". With proof of activity blockchains a node may be required to submit a reference to an output value and/or a proof before being eligible to participate in the building of a consensus on the history of the blockchain 10, e.g. the addition of blocks to the blockchain. This may comprise the pool of possible participants being based on submissions and/or this may comprise a node that has been selected to participate in the addition of a block having a certain amount of time to submit a proof and/or output value.

In some embodiments, the parameter depends on a deposit held by the node in relation to the blockchain 10. In various embodiments, one or more of the following features is implemented:

- Nodes are required to deposit an asset for a certain amount of time (e.g. a certain number of blocks) before participating in a consensus mechanism and/or in the addition of a block;

- Nodes are unable to remove a deposit for a certain amount of time after proposing and/or validating a block;

- The probability of being selected as a participant and/or the influence that a node has on a consensus mechanism is dependent on a deposit period, e.g. the likelihood of a node being selected as a proposer may be proportional to the length of time for which an asset has been deposited.

In some embodiments, the deposit may be unencumbered. A node holding an amount of the asset may be considered to be holding a deposit, where this node may be eligible for participation in the addition of a block while also being able to transfer the deposit. Typically, the node transferring the deposit results in the node no longer being eligible for participation in the addition of a block.

Typically, deposits are related to an encumbrance (e.g. the depositing node cannot easily transfer the deposit). Therefore, even if the depositing node is able to rapidly redirect their computing power, they are unable to rapidly recover their deposit. As such, the depositing node is continuously incentivised to maintain a legitimate blockchain.

The deposit (or another factor) of a node may be considered in a similar way as the number of solutions provided for a proof of work problem. For example, the parameter may depend on the minimum of: a plurality of factors relating to a plurality of proof of work problems as well as a factor relating to a deposit. The parameter may relate to a relative portion of computing power devoted to the power of work problem by a node (as compared to the computing power devoted by other nodes) and a relative size of a deposit held in relation to the blockchain 10 by the node (as compared to the deposit help by other nodes).

Determining the parameter based on a deposit typically comprises a determination of an amount of an asset (e.g. a cryptocurrency) relating to the blockchain 10 that has been set aside by a node. In particular, nodes may be able to deposit cryptocurrency to an address and/or account of the blockchain 10 such that the deposited cryptocurrency cannot be recovered for a certain period of time. This discourages these nodes from taking actions that would reduce the value of the deposit.

In some embodiments, a proof of work problem is used for a race, where the first node that determines a solution (and/or a solution to a problem of sufficient difficulty) is able to propose a block and/or claim a reward. In some embodiments, a proof of work problem may be used without a race, where multiple nodes may be able to provide solutions at different times. For example, where a verifiable delay function is used as a proof of work problem, different nodes may be able to submit solutions relating to different numbers of steps performed and/or different inputs, where each of these submitting nodes gains credit for the solutions. This may, for example, be used to apportion a reward to a plurality of parties depending on comparative amounts of computing power (whereas typically a race condition would result in one node receiving the whole reward).

Where no race is used, the nodes may be incentivised to optimise for efficiency (e.g. minimal computing power) as opposed to speed. By using a mixture of problems with race conditions and problems without race conditions, nodes can be incentivised to optimise for efficiency and for speed for different problems.

The proof of work problems may comprise one or more of:

- A sequential problem and/or a verifiable delay function (VDF). The verifiable delay function may have a fixed number of steps and/or a variable number of steps, where the effect of the verifiable delay function on the parameter may depend on the number of steps performed to obtain a solution.
- A hash function (e.g. SHA 256 or Scrypt). The proof of work may comprise finding a nonce that can be hashed with a block to produce a value with a certain number of leading zeros (as occurs with Bitcoin).
- A prime number search (such as that used for Primecoin).
- An NP problem.
- An NP-hard problem.
- An NP-complete problem (such as the travelling salesman problem).
- A progress-free problem, where the proof of work calculation at time T does not depend on any part of a calculation at time T' < T.
- A non-progress-free problem.
- An optimisable problem, where there is potential for significantly improving the time taken to find a solution either through hardware or software.
- A non-optimisable and/or optimisation resistant problem, where substantial reductions in the time taken to find a solution are deemed unlikely (e.g. based on past experience). Problems may be non-optimisable in software and/or non-optimisable in hardware (e.g. for a given problem it may be possible to substantially reduce a solution time through improved hardware, but not through improved algorithms).

Typically, at least one of the proof of work problems is non-optimisable and/or progress-free, where such problems may in particular be used to determine the proposers of the blocks of the blockchain 10.

An optimisation to a problem may relate to one or more of: a reduction in the computational cost required to solve a problem (e.g. increased computational efficiency); a reduction in the time required to solve a problem (e.g. an increase in speed); and/or a reduction in power required to solve a problem (e.g. increased power efficiency).

An optimisation may relate to an optimisation of software (e.g. an algorithm) used to solve a problem and and/or an optimisation of the hardware used to solve a problem. Hardware optimisations that can benefit the execution of all tasks (for example, increasing rate of CPU cycles) are typically more commonplace than algorithmic optimisations that benefit the execution of all tasks. One reason for this is because, for algorithms, there are theoretical reasons to believe that certain techniques are close to optimal. In contrast, if there exists an upper-limit to CPU cycle frequency, we are likely to be far from it at the present time.

All computational tasks have some degree of potential for optimisation in hardware - for example due to increases in clock speed - and this minimum has historically been quite significant. For some tasks, the degree of optimisation attainable in hardware has been far above this minimum, examples include ASICs for computing cryptographic hash functions; tensor cores for machine learning; and hardware-accelerated elliptic curve point multiplication, e.g. for use in cryptography.

Typically, a non-optimisable problem is a problem for which a substantial algorithmic (e.g. software) optimisation is considered to be unlikely. This may be because an optimal algorithm has already been found. Such non-optimisable problems are known in the art (and the problems used for conventional blockchains typically comprise such non-optimisable problems).

A non-optimisable problem in hardware typically relates to a problem that is resistant to certain types of hardware optimisation, such as multi-threaded execution within specialised architecture. Therefore, a non-optimisable problem in hardware may comprise a problem that is not expected to be optimisable by niche improvements in hardware.

Non-optimisable problems are known in the art and a problem that is known to be non-optimisable may be used for certain situations. Equally, a non-optimisable problem may be identified by identifying a historic speed-up in the solving of this problem. For example, if the total number of solutions submitted for a problem per unit of devoted computational power stays the same for an extended period of time, this problem may be deemed to be non-optimisable.

Problems that are initially optimisable may eventually become non-optimisable once the optimal software and/or hardware for solving these problems are found. This change may be determined by identifying a plateau in the number of solutions submitted for a problem (where, according to the present disclosure, the usage of these problems may change as a result of the change). In this regard, typically problems are expected to remain optimisable in hardware (e.g. due to Moore's Law); therefore, commonly non-optimisable problems relate to problems being non-optimisable in software. A problem may become non-optimisable in software when an optimal algorithm for this problem is found and publicised.

Typically, a problem is considered to be non-optimisable when a substantial optimisation is deemed unlikely. Typically, a substantial optimisation relates to a reduction in the time taken to find a solution and/or a decrease in the computational cost taken to find a solution of: at least 10%; at least 20%; at least 33%; and/or at least 50%.

Problems that have been used with existing blockchains tend to have the property that the difficulty of any puzzle for a problem cannot be determined in advance. This is the case, e.g., for a search for partial hash pre-images. Using this example of a search for partial hash pre-images, certain searches may be easier than others; however, it is not possible to know this until a search has been completed. As a result, a node cannot predict how long a search will take before beginning that search. In contrast, certain problems that are usable with the present disclosure do not have this property. As an example, the travelling salesman problem may be used as one of the proof of work problems. With this example, nodes may choose to only attempt solutions to easy puzzles for this problem (e.g. puzzles where many of the vertices are close together). In order to prevent this, one or more of the following features may be implemented:

- Nodes may be assigned a set of puzzles for a problem in each 'round' (a round being, for example, one block of the blockchain) out of which they may solve as many as they please. There may be a limited time of validity for these solutions, e.g. solutions may be required before the addition of the next block to the blockchain. Continuing with the travelling salesman example, there may be a series of puzzles for this problem generated based on the nth block of the blockchain 10, where nodes are able to submit solutions for these puzzles only up until the addition of the (n+1)th block to the blockchain (or up until the nth block has reached a certain depth in the blockchain). The series of puzzles may be a serial series (e.g. solving one puzzle provides a seed for generating the next puzzle) or a parallel series (e.g. a plurality of puzzles may be generated using a seed based on the nth block).

- The total number of puzzles allocated for a problem for the entire network (for all the nodes) per unit time may be greater than the number of verified puzzle solutions that is expected to submitted to the blockchain 10, per unit time. For each of the sybil-defence factors, the problems may be allocated to individual nodes *pro rata,* in proportion to a node's expected number of solutions. For example, if a node submits x solutions for the proof of work problem q for the nth block, they may be allocated 1.1*x (optionally unique) puzzles to solve before the (n+1)th block is added to the blockchain. This precludes this node from sifting through a large number of possible puzzles to only solve the simplest puzzles (as may be possible if each node is able to select puzzles from a larger pool of puzzles). Furthermore, the allocation of a limited number of puzzles to a node per unit time is useable to limit the rate at which this node can raise the factor of a problem (e.g. this can be used to set a maximum increase of a factor as described above). In some embodiments, the number of puzzles assigned for a first problem is dependent on a node's factor for at least one other problem (e.g. this number may be dependent on a node's mean factor). In such a way, a node can be incentivised (or forced) to move towards factor parity. The above example has mentioned an allocation of 1.1*x puzzles; it will be appreciated that different scaling values may be used. For example, the magnitude of the scaling value may be selected in order to control the maximum rate of increase of a factor; in various embodiments, this value is: less than or equal to 1.05, less than or equal to 1.1, less than or equal to 1.25, less than or equal to 1.5, and/or less than or equal to 2. The use of a larger value enables a node to increase a factor for a problem more quickly; it also (typically disadvantageously) may allow a node to sift through the available puzzles in order to find and focus on the easiest puzzles. The rate of change may similarly be controlled by altering the method of determining this value; in particular, by altering the number of previously blocks used to determine the expected number of solutions for a problem for a node. In various embodiments, this number of blocks is less than or equal to 1, less than or equal to 2, less than or equal to 3, less than or equal to 5, less than or equal to 10, less than or equal to 20, and/or less than or equal to 100. The scaling value may also depend on a characteristic of a node, and/or the factors of a node. For example, the scaling value may be higher for newer nodes, so that new nodes can rapidly increase their factors as they obtain and configure hardware. Older nodes may be given a lower scaling factor, since a rapid increase in the factors of an older node is likely to be due to the discovery of an optimisation (the sharing of which is encouraged by a smallerscaling factor).

- The average difficulty of puzzles for a problem may be determined based on a number of solutions submitted by one or more of the nodes.

- Typically, the difficulty of the puzzles for one or more (or all) of the problems is set so that a plurality of solutions to these problems is expected in the average time of addition of a block. For example, the average solution time for a puzzle for at least one of the problems may be less than 1/10, less than 1/20, less than 1/50, and/or less than 1/100 of the average time of addition of a block. This enables a high resolution to be obtained for the factors (e.g. for the values of the factors).

- In some embodiments, in order to generate a puzzle for a problem, nodes are required to concatenate the hash of a confirmed block of the blockchain with a range of nonces that is determined by the an on-chain feature relating to that node (e.g. a measure of the size of the node, which may be obtained from the number of solutions submitted for this problem in a recent timespan). The node then uses these quantities as a seed to generate one or more puzzles for this problem. In particular, the node may use a verifiable random function (VRF) as the seed.

- In some embodiments, the seed for a puzzle for a second problem is dependent on a solution for a first problem. Therefore, a node wishing to solve this puzzle for the second problem must first solve a puzzle for the first problem. Beneficially, this feature enables a node to provide a single solution that evidences the solving of a plurality of problems. The order of the problems may be pre-defined, random, and/or dependent on the block or the node. For example, nodes that are not at parity may be required to solve puzzles for problems for which they have low factors before they are able to solve puzzles for problems for which they have high factors.

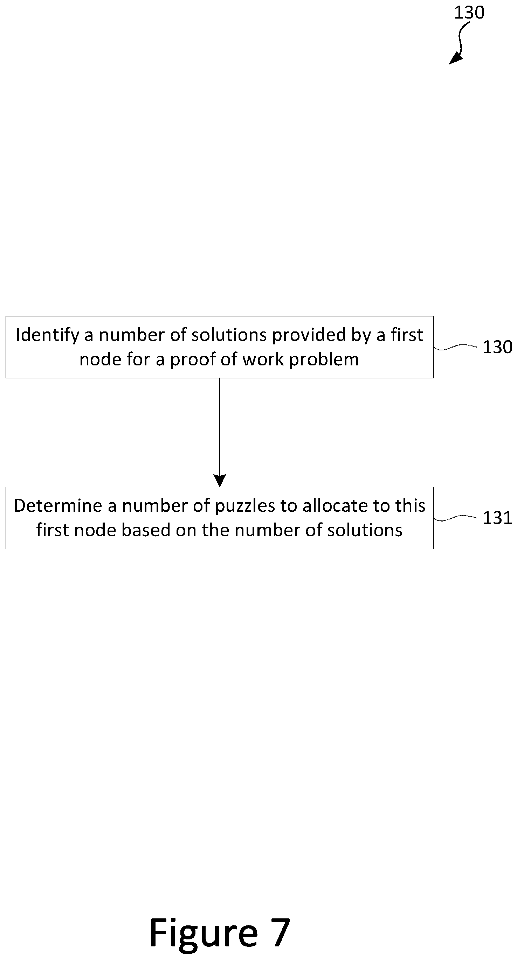

Referring to Figure 7, there is described a method 130 of determining a number of puzzles to be allocated to a first node. This method is typically carried out by a node of the blockchain 10.

In a first step 131, the node identifies a number of solutions provided by a first node for a proof of work problem.

In a second step 132, the node determines a number of puzzles to be allocated to the first node based on this number of solutions. For example, the number of puzzles allocated for the nth block of the blockchain may be allocated based on a number of solutions submitted for the (n-1)th block.

Typically, the allocation of the puzzles is implemented by recording a seed on a block of the blockchain 10; allocating the puzzles may comprise including an appropriate seed in a block of the blockchain in conjunction with specifying a node identifier, where the seed is only valid for the node with this identifier. This seed may be useable to generate a limited number of puzzles. For example, a seed for puzzles that are valid for the first node that may be submitted before the (n+1)th block is added to the blockchain may be a number recorded in the header of a block of the nth blockchain. A single seed value may be used for a plurality of nodes, where this single seed value can be combined with a node identifier to obtain unique seeds for different nodes.

The identification and determination may use the methods described above, e.g. the number of puzzles to be allocated to a node may be determined as $n_{puzzles} = \upsilon \cdot n_{solutions}$, where $\upsilon$ is a scaling factor and $n_{solutions}$ is a number of solutions for a problem previously submitted by the node. This provides a limit to the rate at which the first node can raise their factor for the proof of work problem.

In order to track the nodes, each node may be given an identifier, where this identifier can be used to determine which solutions have been submitted by a node and to allocate puzzles to a node. For example, this identifier may be a randomly generated number that is generated based on a request from a node (or is generated when a node first submits a solution to a problem). Each identifier may then be associated with one or more of: a plurality of factors, a parameter, a number of allocated puzzles (for one or more problem), an optimisation, and an agreement to pay licence fees.

This identifier, and the related information, may be recorded on the blockchain 10, where part of the process of adding a block to the blockchain may comprise a proposing node and/or a validating node updating this information (so that each block contains, for example, an up-to-date record of each node's factors and/or parameter). It will be appreciated that the identifier is typically a non-identifying string (e.g. a string of random numbers), so that personal information about the nodes need not be recorded.

In some embodiments, the process for proposing a block comprises: determining parameters for each node based on factors of that node, which factors are determined by reviewing a previous block of the blockchain; determining an influence and/or reward for one or more nodes based on these parameters; updating the factors; and recording these updated factors and/or updated parameters in the proposed block.

Updating the factors may comprise determining a number of solutions submitted by a node to a share verification contract (SVC) and/or a number of solutions submitted within a transaction recorded in the blockchain. The factors recorded on the nth block may relate to solutions referenced by the (n-1)th block (e.g. solutions submitted in transactions of the (n-1)th block). These factors may then be used for the determination of a proposer of the (n+1)th block (e.g. by a validating node of the nth block). This proposer of the (n+1)th block is then required to update the factors (and so on). Typically, the factors are determined based on solutions referenced in a plurality of previous blocks (e.g. in the previous 5 blocks, the previous 10 blocks, the previous 25 blocks, the previous 50 blocks, and/or the previous 100 blocks).

It will be appreciated that determining factors and/or parameters for each node of the blockchain may comprise determining parameters for each node that has submitted a solution to one of the proof of work problems (where there may be a number of nodes of the blockchain that do not submit solutions).

Optimisations for NP problems can traditionally be difficult to commercialise, which can discourage people from attempting to search for optimisations. The present disclosure provides a way to incentivise this search for optimisations. In this regard, the incentive for a party to search for an optimisation to a problem be considered as

$$incentive := \frac{eventual\ value}{expected\ time\ to\ profitability}.$$

Typically, expected the time to profitability for NP problems is significant, not least since many of these problems do not have obvious commercial relevance (and this can also reduce the perceived eventual value). With the present disclosure, nodes that find optimisations to these problems may receive a reward quickly by charging a licence fee (as described above); this feature both increases the eventual value of finding an optimisation and decreases the time to profitability.

A tractability for a problem may be considered as

$$tractability := \frac{incentive}{hardness},$$

where nodes are more likely to focus on tractable problems. Due to an increase in the incentive (as explained above), the tractability for a problem increases when it is used as one of the proof of work problems for a blockchain according to the present disclosure. Typically, the incentive is a function of the hardness, since the eventual value and the time to profitability typically differ for problems of differing difficulty.

In some embodiments, the parameter (e.g. the reward) for a problem and/or the reward for providing an optimisation is dependent on a hardness of that problem. This may comprise a factor for a proof of work problem depending on that problem and/or a solution to that problem. For example, the effect on the factor of a solution to a verifiable delay function may depend on the number of steps performed to obtain this solution. Equally, problems that are considered difficult to optimise or solve (e.g. complicated mathematical problems) may provide a greater reward. This can be used to further incentivise the nodes to find optimisations to hard problems.

With conventional blockchains based on a single proof of work problem, the use of non-progress free problems and optimisable problems is problematic, since this enables a node that discovers an optimisation to gain control over the blockchain. The use of multiple proof of work problems as disclosed in the present invention mitigates this problem, since a node finding an optimisation for only a single proof of work problem is not able to take control over the blockchain. This increases the types of problems that can be used to prove work and therefore allows, for example, work to be proved by doing work on useful problems (such as protein unfolding) so that this work is not wasted.

In a typical implementation using w different proof of work problems, a proposer for a given block is selected based on this proposer providing a solution to one of the proof of work problems. This may, for example, comprise the proposer combining a proposed block with a nonce, where a header of the combined block comprises the solution. If the block header comprises a valid solution (e.g. if a hash of the block header has a certain number of leading zeros) the proposed block is added to the blockchain. The rewards for the block (e.g. a block reward and/or transaction fees relating to transactions in the block) may then be divided among a number of nodes in dependence on (at least) the relative computational powers devoted by each node to one or more other proof of work problems.

The proof of work problem related to the addition of each block to the blockchain may be selected from the w proof of work problems (e.g. selected in a round robin format, or selected randomly). Equally, a solution to any of the proof of work problems may be sufficient to propose a block. In some embodiments, the same proof of work problem must be solved for each block of the blockchain, where nodes are still incentivised to find solutions to the other problems in order to maximise their reward. This may enable the disclosed methods to be more easily implemented on existing blockchains, where the method of adding blocks to these existing blockchains need not be altered.

Where a proof of work problem is used to determine a proposer of a block (or another participant in the addition of a block to the blockchain), this problem is typically a non-optimisable and/or progress-free proof of work problem.

As mentioned previously, for a block to be considered final, a node may require the block to have reached a certain depth in the blockchain and/or may require later blocks to be based on a plurality of different proof of work problems. Therefore, a block of the blockchain may comprise an indicator of a number, or type, of proof of work problems that have been used since a given block. For example, each block may comprise an indication of a proof of work problem that has been solved in order to propose that block, so that a node can rapidly determine whether a block is sufficiently final based on the types of proof of work problems solved for subsequent blocks.

Typically, the reward received by a proposer of a bock is equal to a fraction u of the total reward for the addition of that block. The total reward is typically the sum of a block reward and transaction fees relating to transactions in the block. The remainder of the reward (1-u) of the total reward may then be split between other eligible participants. Typically, u is greater than 1/w, where w is the number of proof of work problems. This encourages each node to spread their computing power across the proof of work problems.

In a specific embodiment, the blockchain 10 is configured such that the reward for providing solutions is based on a different parameter to the probability of being eligible to participate in the addition of blocks to the blockchain 10. In particular, the reward may be based on solutions for all n of the problems, while the probability of being eligible to participate in the addition of blocks is dependent on only a subset m of the problems (or *vice versa*).

In such embodiments, the expected reward E[R] for solving the proof of work problems is equal to:

$$E[R] = \frac{u}{m} \cdot \left(a_1^i + a_2^i + \cdots + a_m^i\right) + (1 - u) \cdot P\left(a_1^i + a_2^i + \cdots + a_w^i\right) \qquad (9)$$

Where, $a_q^i$ is the factor for the node i for the proof of work problem q (and where, as described above, this factor is typically normalised with reference to the total work being devoted to the proof of work problem q by all nodes).

u is a fraction of a block reward that is distributed among the other nodes.

$P^i(t)$ is the parameter forthe node i at time t (and is dependent on a plurality of the proof of work problems). In this implementation, $P^i(t)$ is typically used to determine a reward for a node.

m relates to a number of proof of work problems that is a subset of the total number of proof of work problems.

In some embodiments, out of n total proof of work blockchains there are m proof of work problems (where m ≤ n) that are:

- progress-free (and optionally optimisable); and/or
- Non-progress-free and non-parallelisable (and optionally optimisable).

A progress-free problem is typically parallelisable, since it requires only a limited number of steps to find a solution (e.g. since the input value may be reset every block). However, by being progress-free a malicious node cannot build up an advantage over an extended period of time.

A non-progress-free and non-parallelisable problem (such as a verifiable delay function) is also resistant to a malicious node building up an advantage, since the node cannot build up an advantage by using a large number of parallel processors to find solutions.

Based on the above equation for expected reward, so long as u ≤ m/n, a node maximises their expected return by having a similar factor for each proof of work problem. Typically, the parameter is determined based on each factor, so that neglecting any of the proof of work problems results in a significant decrease in the second term of the above equation.

An example of the above implementation uses a first proof of work problem that is a verifiable delay function. A solution to this verifiable delay function based on a minimum number of steps is required to be able to propose a block, where the first node to provide such a solution becomes the block proposer. A second proof of work problem that is any proof of work problem (e.g. an optimisable, non-progress free, and/or parallelisable problem) is used to determine the reward for the proposal of a block.

If u is set here to be at a maximum value for u ≤ m/n (i.e. u = ½), the above equation (9) becomes:

$$E[R] = \frac{a_1^i}{2} \cdot + \frac{P\left(a_1^i + a_2^i\right)}{2} \qquad (10)$$

If u is instead set to be 1/3, the above equation (9) becomes:

$$E[R] = \frac{a_1^i}{3} \cdot + \frac{2}{3} P\left(a_1^i + a_2^i\right) \qquad (11)$$

The parameter is typically dependent on a minimum factor and/or an average factor, and so it can be seen that focusing on a single one of the problems will limit the expected reward (either by reducing the first term or the second term).

In various embodiments, u is at least 1/10, at least 1/5, at least 1/4, at least 1/3, at least 1/2, and/or greater than 1/2.

In various embodiments, u is no greater than greater than 1/2, no greater than 1/3, no greater than 1/4, no greater than 1/5, no greater than 1/10, and/or less than 1/10.

The reward (and/or the factor for a proof of work problem) may depend on a solution time, where this can be used to incentivise parties to submit solutions as quickly as possible. The solution time may be based on timestamps of blocks of the blockchain 10, where one or more of the proof of work problems may use (or be required to use) an input from a block of the blockchain. The solution time may then be calculated using the timestamp of this input block (from which the input is taken) and the timestamp of an output block (in which the solution is recorded and/or provided).

Referring to equation 9 above, typically the first term incentivises speed, where the first term is increased by nodes determining solutions to the problems more quickly. Typically, the second term incentivises cost efficiency, where the second term is increased by nodes determining solutions to the problem using a reduced amount of computational power.

In some embodiments, credit for solutions may be transferred between nodes, e.g. in the form of certificates. As an example, a first node may be able to find a solution and then transfer a certificate relating to this solution to a second node, which second node is able to provide the certificate to a further node to influence the determination of the parameter for the second node (e.g. by increasing a factor of the second node, this factor being related to the solution). This enables the second node to become rapidly involved in the addition of blocks to the blockchain 10 (by receiving certificates from a different node that has previously devoted computational power to the proof of work problems).

In some embodiments, eligible participants for a blockchain are able to receive a certificate that is useable to supplement the parameter for that blockchain, such certificates may be received instead of, or as well as, a block reward. In some embodiments, nodes are able to redeem a portion of the computational power devoted to a problem in return for a certificate. Where certificates are used, a node is typically able to trade a portion of a reward for a certificate. This certificate may then be traded with another node (e.g. a node with fewer solutions for one of the problems).

Typically, certificates may be transferred and are then 'consumed' during the determination of the parameter. Certificates may be valid for the determination of only a single parameter, may be valid for the determination of multiple parameters (e.g. for a number of blocks of the blockchain), or may be valid for an indeterminate and/or unlimited time period. For example, mining pools that specialise in solving the first proof of work problem may agree to trade certificates with mining pools that specialise in solving the second proof of work problem in order to maximise their overall rewards.

Since the probability of any given node finding a solution to one of the proof of work problems may be quite small, certificates may be issued to/issuable from pools of participants, which pools are more likely to find a solution. In practice, mining pools comprise a large portion of the network computational power for most proof of work problems; certificates may be issued to mining pools upon the provision of a solution, where the mining pool then distributes these certificates among the constituent miners in proportion to the computational power devoted by each constituent miner.

In various embodiments, the certificates have a limited lifespan and/or are tradeable to a subset of other nodes. Limiting the tradability of certificates may be of some value in dissuading large mining pools. Pools which control a certain percentage of a factor (e.g. computational power or deposit) for one of the blockchains may be prevented from obtaining certificates relating to the other blockchains. This encourages the formation of a greater number of smaller pools that can trade more freely. This can be used to guard against 51% attacks.

The above description has primarily considered the use of a plurality of proof of work problems being used to determine a parameter for a single blockchain. More generally, the proof of work problems may relate to a plurality of blockchains

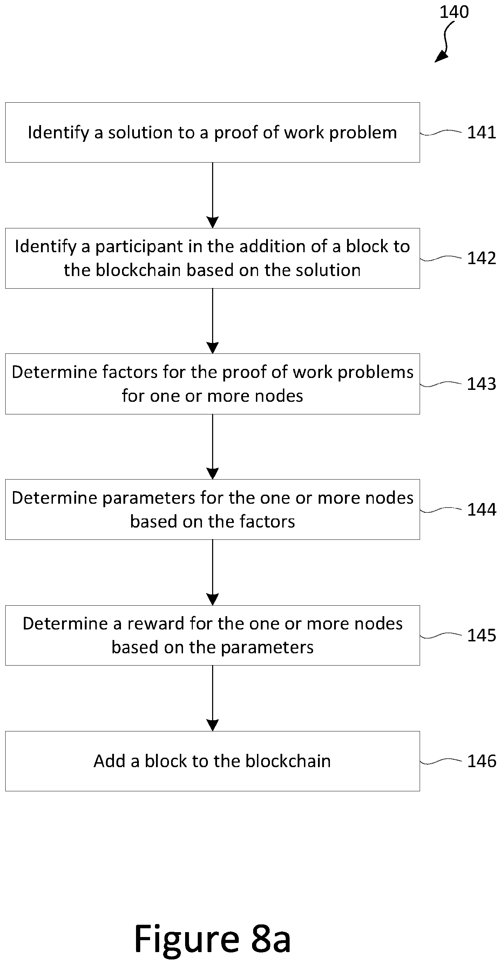

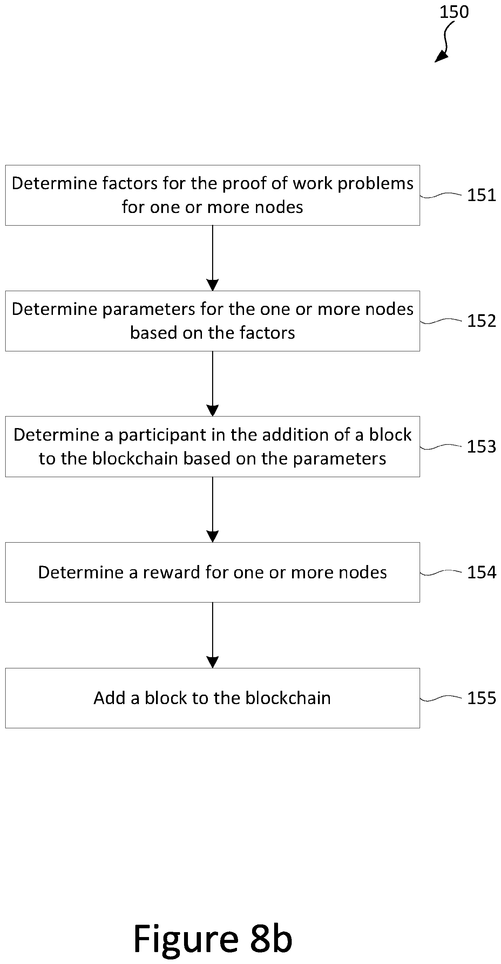

Referring to Figures 8a and 8b, there are shown exemplary methods 140, 150 for adding a block to the blockchain 10. These methods are typically performed by a node of the blockchain 10. It will be appreciated that the features described in relation to the methods of Figures 8a and 8b may be implemented in any combination.

Referring to Figure 8a, there is described a method 140 of adding a block to the blockchain in which a reward is determined based on solutions to the proof of work problems.

In a first step 141, the node determines a solution to one of the proof of work problems. Typically, this comprises determining a solution to a proof of work problem that is:

- progress-free (and optionally optimisable); and/or
- Non-progress-free and non-parallelisable (and optionally optimisable).

In some embodiments, the solution comprises a solution to a plurality of proof of work problems.

In a second step 142, the node identifies a participant in the addition of a block to the blockchain 10 (e.g. a block proposer) based on the solution. Typically, this comprises a first node transmitting a proposed block to a second node, where the proposed block comprises a solution to one of the problems. The second node is then able to identify the first node as the proposer of the block based on the solution being a valid solution. The proposer of a block may be determined as the first node that provides a solution to one of the problems.

In a third step 143, the node determines factors for the proof of work problems for one or more of the nodes of the blockchain 10. This typically comprises determining a number of solutions provided by each of these nodes for each of the proof of work problems. Determining the factors may comprise one or more of:

- Determining the number of solutions provided in a preceding time period (e.g. in a number of recent blocks).
- Determining the number of solutions based on previous blocks of the blockchain 10 (e.g. identifying solutions submitted in previous blocks of the blockchain).
- Evaluating a share verification contract and/or a smart contract to determine a number of solutions provided.
- More generally, determining a computational power devoted to one or more problems by one or more of the nodes.

Typically, the factors comprise normalised factors (e.g. the factor for a node may be determined as the number of solutions provided by this node divided by the number of solutions provided by all nodes).

In a fourth step 144, parameters for the nodes of the blockchain are determined based on the factors. These parameters may for example, be determined as the average value of the factors of a node or the minimum value of the factors.

Typically, the parameters are normalised (e.g. a normalized parameter for a node is determined as the parameter for this node divided by the sum of parameters for all nodes).

In a fifth step 145, a reward for each node is determined based on that node's parameter (and/or normalised parameter). For example, each node may receive a portion of a block reward that is proportional to their normalised parameter.

In a sixth step 146, a block is added to the blockchain 10. This block typically comprises an indication of the reward and/or the block participants. In particular, the reward may be provided using transactions included in the block, where an amount of a cryptocurrency is transferred to those nodes receiving a reward.

While typically, the method 140 comprises adding a block to the blockchain 10, more generally the method may comprise transmitting information to another node of the blockchain.

Typically, a reward is determined for a node based on the parameter of that node. In some embodiments the nodes do not receive a reward. In some embodiments, a reward is provided to the participants in the addition of a block (e.g. the proposer may receive a block reward and/or transaction fees) and/or to each of the nodes that are eligible to participate in the addition of blocks to the blockchain.

For example, the reward for a node i may be determined using the equation:

$$reward \propto \frac{P_i}{\sum_j P_j} \qquad (12)$$

Equally, the reward may be dependent on one or more other factors, such as a deposit held by the node i. For example, the reward may be determined using the equation:

$$reward = \frac{\min(P_i, s_i)}{\sum_j \min(P_j, s_j)} \qquad (13)$$

Where $s_i$ is a value associated with a stake held by the node i in relation to the blockchain 10.

Referring to Figure 8b, there is described a method 150 of adding a block to the blockchain in which a participant in the addition of a block to the blockchain is determined based on the proof of work problems.

In a first step 151, factors for the proof of work problems are determined for one or more of the nodes of the blockchain 10.

In a second step 152, parameters for the nodes are determined based on the factors.

In a third step 153, a participant in the addition of a block to the blockchain 10 is determined based on the parameters. This typically comprises determining one or more of: a proposer, a validator, and/or a signer of a block. The participants may be determined based on their relative parameters, for example where the normalised parameter for a node is 0.3, this node may have a 30% probability of being selected as a proposer of a block of the blockchain.

In a fourth step 154, a reward for one or more nodes is determined. This reward may be determined based on the parameters. Equally, the reward may be based on the participants of the block; for example the proposer of the block may receive a block reward and/or transaction fees.

In a fifth step 155, a block is added to the blockchain 10. This block typically comprises an indication of the reward and/or the block participants.

As has been mentioned above, the parameter and/or one of the factors may also depend on the activity of a node on a second blockchain.

In this regard, referring to Figure 9, there is shown a system comprising the blockchain 10 (the 'main chain') and a second blockchain 20 (the 'side chain'). Each blockchain comprises a plurality of component blocks, where each block comprises a number of entries, such as transactions. Typically, each blockchain has a related cryptocurrency (such as Bitcoin or Algorand), where the entries on the blockchain comprise transactions made using that cryptocurrency; hereafter these are referred to as a 'first cryptocurrency' (for the main chain) and a 'second cryptocurrency' (for the side chain). An amount of cryptocurrency may be transferred in the form of a 'token', where a token may be worth, for example, an amount of Bitcoin or Algorand.

Information relating to the side chain 20 (e.g. a hashed value of the side chain at a given block of the side chain and/or the entirety of one or more blocks of the side chain) may be recorded on the main chain 10. This being the case, the side chain can benefit from the security of the main chain. In the event that the side chain is compromised after the recording of information on the main chain, there remains an immutable record of a portion of the side chain on the main chain. This enables the identification of altered blocks by comparison of the side chain to a record of the side chain stored in the main chain. If an attack on the side chain is identified, the storage of relevant information on the main chain also enables the side chain to be forked from a 'legitimate' (e.g. unaltered) block that is stored on the main chain. It will be appreciated that the main chain can be continuously updated (e.g. each block) with a record of the transactions and/or blocks of the side chain, so as to minimise the opportunities for the side chain to be attacked.

The side chain arrangement enables advantages of the main chain and/or an existing chain to be attained (e.g. security and extant miners) while enabling the use of other blockchain technologies that have their own advantages (e.g. faster time to finality). Furthermore, in the event that the side chain is compromised, the main chain can remain secure.

The present disclosure relates in part to a method of determining a parameter relating to the influence of a node on a consensus mechanism of a first blockchain based on a proof of work problem relating to a second blockchain. For example, the probability of being selected to participate in the addition of a block to the side chain 20 and/or the reward for being the proposer of a block of the side chain may depend on solutions provided to the proof of work problem of the main chain 10. This enables a side chain to benefit from computing power that is devoted to a (possibly more established) main chain. This is also useable to encourage nodes to devote computing power to proof of work problems for both the main chain and the side chain.

In a specific example, a proof of work problem for the side chain 20 comprises a verifiable delay function, which verifiable delay function may comprise one of the proof of work problems. The output of the verifiable delay function can be used as a random number beacon. This output may then be recorded on the main chain 10. The addition of blocks to the side chain and/or the reward for adding blocks to the side chain may depend on both of the verifiable delay function and a proof of work problem for the main chain.

A benefit of this method (that is of particular relevance to multiple chain implementations) is that new proof of work problems can be implemented without the need to implement a new token. In particular, a new proof of work problem for the side chain 20 can be used alongside an existing proof of work problem for the main chain 10, where the reward for finding solutions to these proof of work problems is an amount of a token for the main chain.

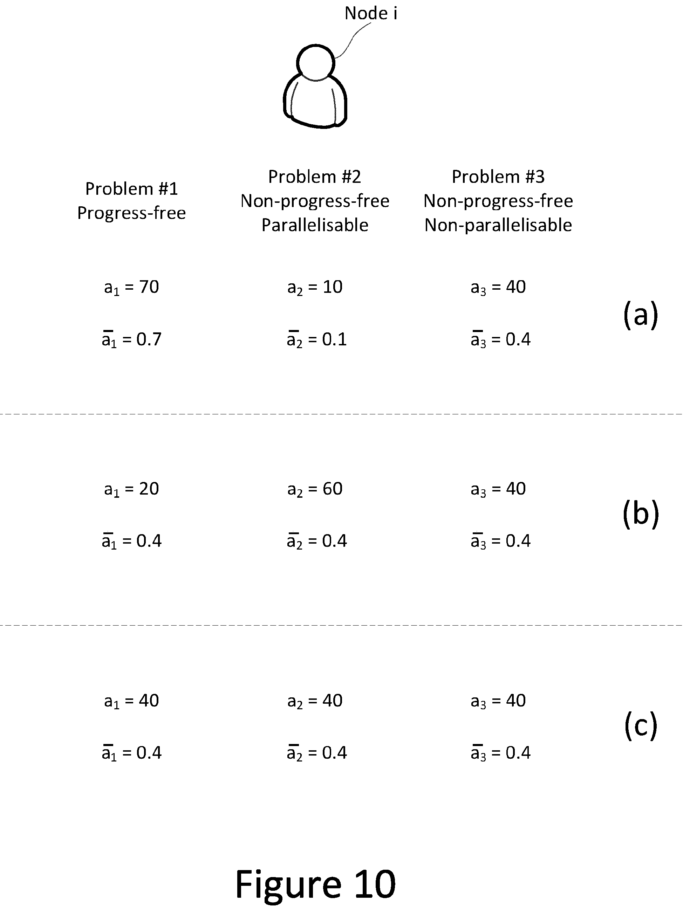

Referring to Figures 10a - 10c, a number of the methods, systems, and features described above are now described using a practical example. It will be appreciated that these methods, systems, and features may be provided in any combination such that the below implementations are exemplary only.

Figures 10a - 10c consider a system with three proof of work problems.

- The first of these problems, Problem #1, is progress-free.

- The second of these problems, Problem #2, is non-progress-free and parallelisable.

- The third of these problems, Problem #3, is non-progress-free and non-parallelisable.

Referring to Figure 10a, there exists a node i that, at a first time, has the factors and the normalised factors:

$$a_1^i = 70$$

$$a_2^i = 10$$

$$a_3^i = 40$$

$$\bar{a}_1^i = 0.7$$

$$\bar{a}_2^i = 0.1$$

$$\bar{a}_3^i = 0.4$$

In this example, the factors relate to the number of solutions submitted by the node in a unit time (e.g. per block). For example, for Problem #1, the node i submits 70 solutions per block. The total number of solutions for Problem #1 (submitted by all of the nodes of the blockchain) is 100 solutions per block, so the factor for the node i for Problem #1 is 70 and the normalised factor for the node i for Problem #1 is 70/100 = 0.7. It will be appreciated that this is only a simple example; the factors may be dependent on other/further features of the problem (e.g. a difficulty of the problem or a weighting assigned to the problem). The factors may be determined using share verification contracts, where each node submits solutions to the problems to the share verification contract.

In this example, it can be seen that the node is not at parity for the normalised factors of the node. More specifically, the distribution of the node's normalised factors can be stated as:

$$\mu_a^i = \frac{0.7 + 0.1 + 0.4}{3} = 0.4$$

$$\sigma_a^i = \sqrt{\frac{1}{3}\left((0.7 - 0.4)^2 + (0.1 - 0.4)^2 + (0.4 - 0.4)^2\right.} = \sqrt{\frac{1}{3}(2(0.3)^2} = \sqrt{\frac{0.18}{3}} = 0.245$$

According to various of the embodiments of the invention:

a) The first node to submit a solution to any of the problems may be selected as the proposer of a block of the blockchain. With the numbers above, there are 100 total solutions submitted for each problem per block and the node i is submitting 120 total solutions; therefore, there is a 120/300 = 40% chance that node i proposes the block.

b) Problem #1 may be used to determine a proposer of a block, where the block reward for proposing this block is dependent on Problems #1 and #3 (and optionally Problem #2). Therefore, there may be a 70% $\left(\bar{a}_1^i\right)$ chance that the node i is selected as the proposer for a block, and node i may receive 40% $\left(\mu_a^i\right)$ of a total block reward rewards for a block proposed by any of the nodes of the blockchain.

c) A parameter may be determined for the node i based on the factors, e.g. the parameter may be determined using

$$P^i = \frac{\mu_a^i}{1 + \sigma_a^i} = \frac{0.4}{1.245} = 0.321.$$

the equation:  This parameter may be used to determine the influence of the node i on the building of a consensus on the history of the blockchain 10 (e.g. the chance of the node i being selected to propose a block) and/or the reward for node i when a block is added to the blockchain (by node i and/or by another block).

d) A plurality of parameters may be determined for the node i depending on the factors. For example, the influence of the node i on the building of a consensus on the history of the blockchain 10 (e.g. the chance of the node i being selected to propose a block) may be dependent on Problems #1 and #3 only (since these problems are either progress-free or non-parallelisable) and the reward may be dependent on all of the problems. As an example, the probability of the node i being selected to propose a block may be 55% $\left(\frac{\bar{a}_1^i + \bar{a}_3^i}{2} = 0.55\right)$ with the reward received by the node i when a block is added to the blockchain being 40% of a total block reward $\left(\mu_a^i\right)$.

e) Further to the example given in d) above, a portion u of the total block reward may be provided to the proposer of a block with the remaining 1-u of the total block reward being distributed among all eligible nodes. As described above, typically u ≤ m/n. With this example, u ≤ 2/3. Using a value of u that is u = 2/3 and a parameter that is determined as the mean of all normalised factors, this leads to the node i receiving an expected reward as described

$$E[R] = \frac{2}{3*2} * \frac{\bar{a}_1^i + \bar{a}_3^i}{3} \cdot + \frac{1}{3} P\left(a_1^i + a_2^i + a_3^i\right) = \frac{1.1}{9} + \frac{0.4}{3} = \frac{2.3}{9}.$$

by Equation 9 above; this simplifies to

Referring to Figure 8b, at a second time, the node i may choose to rebalance their factors to reach parity. Node i is aware that at the first time other nodes have submitted 30 solutions for Problem #1, 90 solutions for Problem #2, and 60 solutions for Problem #3, therefore Figure 8b considers an example where node i decides to submit 50 more solutions for Problem #2 at the cost of submitting 50 less solutions for Problem #1 (by reallocating computational power).
Assuming that the behaviour of each other node stays the same, the above variables become:

$$a_1^i = 20$$

$$a_2^i = 60$$

$$a_3^i = 40$$

$$\bar{a}_1^i = 0.4$$

$$\bar{a}_2^i = 0.4$$

$$\bar{a}_3^i = 0.4$$

$$\mu_a^i = \frac{0.4 + 0.4 + 0.4}{3} = 0.4$$

$$\sigma_a^i = \sqrt{\frac{1}{3}\left((0.4 - 0.4)^2 + (0.4 - 0.4)^2 + (0.4 - 0.4)^2\right)} = 0$$

Returning to the above embodiments:

a) The first node to submit a solution to any of the proof of work problems is selected as the proposer of a block of the blockchain. The total number of solutions has not changed, neither has the number of solutions submitted by the node i; therefore, there is a 120/300 = 40% chance that node i proposes the block.

b) Problem #1 is used to determine a proposer of a block, where the block reward for proposing this block is dependent on Problems #1, #2, and #3. Therefore, there is a 40% $\left(\bar{a}_1^i\right)$ chance that the node i is selected as the proposer for a block, and node i receives 40% $\left(\mu_a^i\right)$ of a total block reward rewards for a block proposed by any of the nodes of the blockchain.

c) A parameter is determined for the node i based on the factors using the equation: $P^i = \frac{\mu_a^i}{1+\sigma_a^i} = \frac{0.4}{1} =$ 0.4. This parameter may be used to determine the influence of the node i on the building of a consensus on the history of the blockchain 10 (e.g. the chance of the node i being selected to propose a block) and/or the reward for node i when a block is added to the blockchain (by node i and/or by another block).

d) A plurality of parameters may be determined for the node i depending on the factors. The probability of the node i being selected to propose a block is 40% $(\frac{\bar{a}_1^i + \bar{a}_3^i}{2} = 0.40)$ with the reward received by the node i when a block is added to the blockchain being 40% of a total block reward $(\mu_a^i)$.

e) A portion u of the total block reward is provided to the proposer of a block with the remaining 1-u of the total block reward being distributed among all eligible nodes. Using a value of u that is u = 2/3 and a parameter that is determined as the mean of all normalised factors, this leads to the node i receiving an expected reward of

$$E[R] = \frac{2}{3*2} * \frac{\bar{a}_1^i + \bar{a}_3^i}{3} \cdot + \frac{1}{3}P\left(a_1^i + a_2^i + a_3^i\right) = \frac{0.8}{9} + \frac{0.4}{3} = \frac{2}{9}.$$

It can be seen that in certain embodiments (e.g. that of c) above), the move to parity benefits the node i. It can also be seen that in certain embodiments (e.g. those of d) and e) above), the move to parity is disadvantageous. These various embodiments (and combinations of these embodiments) can thus be used to incentivise devoting computational power at parity and/or devoting computational power to certain problems or types of problems (e.g. the embodiments of d) and e) above encourage the node to devote computational power to progress-free and/or non-parallelisable problems which are resistant to a node concealing a large number of solutions and then submitting these all at once).

The example of Figure 8b considers a situation where the opportunity cost of node i submitting a solution to Problem #2 is one solution to Problem #1 (i.e. by submitting one fewer solution for Problem #1 the node i is able to submit one greater solution for Problem #2).

If this opportunity cost is the same for all nodes (as is likely unless node i has a concealed optimisation for one of these problems), the other nodes of the blockchain 10 will identify that they can easily raise their factor for Problem #1. This is because at the second time there are only 50 total solutions being submitted for Problem #1, as compared to, for example, 150 total solutions for Problem #2. Therefore, the other nodes are likely to rebalance their factors to submit additional solutions for Problem #1 (since it is comparatively easy for these nodes to raise their normalised factor for Problem #1). In the long term this will result in global parity. With this example there are 300 total solutions with node i submitting 120 of these solutions. Assuming the opportunity cost for each node is the same, then in the long term each node will minimise costs by having an equal factor for each problem. Thus, node i will benefit from submitting 40 solutions to each problem and the total number of solutions for each problem will tend to 100 as shown in Figure 8c.

An evident feature of the use of normalised factors is that the normalised factors (and the distribution of normalised factors) for the node i are affected by the activities of the other nodes of the blockchain. Considering the system of Figure 8c, if another node (e.g. a node with an optimisation for Problem #2) submits an additional 400 solutions in a block for Problem #2 this will result in the normalised factor for node i for Problem #2 decreasing from 0.4 to 40/500 = 0.08. This will have a substantial impact on the mean and the standard deviation of the distribution of node i's factors (changing them to $\mu_a^i = 0.293$ and $\sigma_a^i = 0.151$. This could have a significant impact on the parameter(s) for node i. Therefore, node i may wish to rebalance its factors (assuming the same opportunity cost) to provide 12.5 solutions to each of Problems #1 and #3 and 95 solutions to problem #2. This leads to $\mu_a^i = 0.172$ and $\sigma_a^i = 0.001$. However, it can be seen that if the other nodes in the system act similarly this gives the other node (with the optimisation) the chance to increase their normalised weighting for Problem #1 and #3 at a low cost. The impact of an optimisation being discovered can be limited by the use of a disparity threshold to limit the factor discrepancy of any node and/or the rate of change of a factor for any node as described above.

The use of a disparity threshold can be described with reference to Figure 8a. At the first time that relates to Figure 8a the ratio of $\frac{\bar{a}_{max}}{\bar{a}_{min}}$ for i is equal to 7. In order to encourage parity, a threshold may be implemented, as has been described above. For example a maximum $\frac{\bar{a}_{max}}{\bar{a}_{min}}$ of 1.05 may be implemented. With such a threshold the excess may, for example, be redistributed among other nodes.

For the sake of a simple example, an embodiment is considered where this excess is simply ignored. Repeating the above analysis, the relevant variables then become:

$$a_1^i = 70$$

$$a_2^i = 10$$

$$a_3^i = 40$$

$$\bar{a}_{1,eff}^i = \bar{a}_2^i * 1.05 = 0.105$$

$$\bar{a}_{2,eff}^i = \bar{a}_2^i = 0.1$$

$$\bar{a}_{3,eff}^i = \bar{a}_2^i * 1.05 = 0.105$$

$$\mu_a^i = \frac{0.105 + 0.1 + 0.105}{3} = 0.103$$

$$\sigma_a^i = \sqrt{\frac{1}{3}((0.105 - 0.103)^2 + (0.1 - 0.103)^2 + (0.105 - 0.103)^2} = 0.002$$

It can be seen that the parameter will be heavily dependent on the lowest factor. Therefore, returning again to the above embodiments with the relevant parameters being based on the effective weightings (following the thresholding):

a) The first node to submit a solution to any of the proof of work problems is selected as the proposer of a block of the blockchain. There is a 10.3% chance that node i proposes the block.

b) Problem #1 is used to determine a proposer of a block, where the block reward for proposing this block is dependent on Problems #1, #2, and #3. Therefore, there is a 10.5% $\left(\bar{a}_{1,eff}^i\right)$ chance that the node i is selected as the proposer for a block, and node i receives 10.3% $\left(\mu_a^i\right)$ of a total block reward rewards for a block proposed by any of the nodes of the blockchain.

c) A parameter is determined for the node i based on the factors using the equation: $P^i = \frac{\mu_a^i}{1+\sigma_a^i} = \frac{0.103}{1.002} = 0.103$
(to 3dp for consistency). This parameter may be used to determine the influence of the node i on the building of a consensus on the history of the blockchain 10 (e.g. the chance of the node i being selected to propose a block) and/or the reward for node i when a block is added to the blockchain (by node i and/or by another block).

d) A plurality of parameters may be determined for the node i depending on the factors. The probability of the node i being selected to propose a block is 10.5% $\left(\frac{\bar{a}_{1,eff}^i + \bar{a}_{3,eff}^i}{2} = 0.105\right)$ with the reward received by the node i when a block is added to the blockchain being 10.3% of a total block reward $\left(\mu_a^i\right)$.

e) A portion u of the total block reward is provided to the proposer of a block with the remaining 1-u of the total block reward being distributed among all eligible nodes. Using a value of u that is u = 2/3 and a parameter that is determined as the mean of all normalised factors, this leads to the node i receiving an expected reward of

$$E[R] = \frac{2}{3*2} * \frac{\bar{a}^i_{1,eff} + \bar{a}^i_{3,eff}}{3} \cdot + \frac{1}{3}P\left(a^i_1 + a^i_2 + a^i_3\right) = \frac{0.105}{9} + \frac{0.103}{3} = \frac{0.414}{9}.$$

It can be seen that in this instance the node i will suffer greatly from balancing the factors as in Figure 8a instead of rebalancing to reach the factors of Figure 8b or 8c, and so the use of a non-parity/discrepancy threshold and/or a non-parity/discrepancy penalty can be used effectively to encourage parity and discourage centralisation.

In practice, the reason for node i having one factor that is substantially greater than the other factors would likely be because node i has found an optimisation for that factor. If a disparity threshold is implemented as described above, this greater factor does not substantially benefit the node i; therefore the node i is incentivised to share the optimisation, since the node may then be able to receive some reward for this optimisation (e.g. via licence fees).

Alternatives and modifications

Various other modifications will be apparent to those skilled in the art. For example, while the detailed description has described the use of a main chain and a side chain, it will be appreciated that the method may be used with any two blockchains, where the blockchains may or may not rely on each other for security.

While the description primarily relates to the finding of solutions to proof of work problems, it will be appreciated that more generally the parameter may depend on a computing power devoted to the proof of work problems. The computing power is typically determined through the submission of solutions (where submitting a solution proves an amount of computing power has been devoted); however, the computing power may also be determined by other means, such as the provision of computing logs.

In order to reduce the risk of attacks on any blockchain, there may be implemented a fraud proof, for example as described in "Fraud proofs: Mustafa Al-Bassam, Alberto Sonnino, and Vitalik Buterin. Fraud proofs: Maximising light client security and scaling blockchains with dishonest majorities. arXiv preprint arXiv:1809.09044, (2018)".

While the detailed description has primarily considered the transfer of a digital asset, it will be appreciated that more generally 'transactions' may relate to the storage of any form of information. The blockchain 10, the main chain and/or the side chain 20 may for example store information relating to the behaviour of a node.

The information stored on the blockchains 10, 20 may be used to present an output to a user and/or to trigger an alarm. For example, the presence of a particular record on the blockchain may result in an alert being generated and displayed to a relevant node. Further, one or more nodes may be able to view records stored on the blockchain(s), where these records may inform decisions made by those nodes. As examples, the records may enable governments to enforce laws, parents to supervise the activities of their children, or companies to develop more efficient products. In general, the blockchains enable nodes to take action based on recorded information, where this information is typically recorded in an immutable manner.

In some embodiments, the number of solutions provided by a node may be used to determine the presence of an optimisation and/or to determine an amount of computational power devoted by the node and to trigger an alarm based on this determination (e.g. a notification to another node). This alarm can be used to increase security, where the alarm is usable to identify nodes that are devoting a certain amount of computational power to problems. This can be used, for example, by parents to monitor the activity of their children.

While the detailed description has primarily given examples with reference to Bitcoin, it will be appreciated that the disclosed systems and methods are equally applicable to other blockchain implementations, where appropriate modifications may be required to take into account differing operation codes.

While the detailed description has primarily described the methods being applied to blockchains, it will be appreciated that the methods and systems described herein may be applied to any public consensus network (PCN) and/or distributed consensus network (DCN), e.g. blockchains, graphchains, Directed Acyclic Graph (DAG), Avalanche, and the internet of things. In such embodiments, the PCN may not comprise blocks, so that where information has been described as being contained in a block or a block header, more generally such information may be included in, or contained in, a PCN.

With Graphchain, nodes typically add proof of work solutions to transactions, and are rewarded in proportion to the difficulty of the solution, with rewards from a rewards pool. The pool is replenished by transaction fees, and the reward per unit problem difficulty is adjusted so as the keep the size of the reward pool constant, relative to the rate at which it is depleted. With the present disclosure, the reward may depend on solutions relating to a plurality of proof of work problems. For example, 1/w of the total fee available from each transaction, and that transaction's ancestors, may be available to be claimed in return for providing solutions for each of the w proof of work problems.

In some embodiments that use Graphchain (or similar technologies), there is a requirement that there must be sufficient fees "available to be drained" from the ancestor nodes referenced by any transaction (otherwise the solution does not count towards the parameter of a node). Payments are typically allocated to nodes periodically, with fees being drained *pro rata* from the "tips" of the DAG (according to the available reward) according to each node's parameter.

Typically, requirements for nodes are implemented using smart contracts. For example, nodes may be required to: use a certain algorithm to determine a solution for a problem; indicate the algorithm used to determine a solution for a problem; and/or transfer an amount of a reward (e.g. a block reward) based on an optimisation and/or algorithm used by that node. These requirements can be implemented by requiring nodes to submit information to a smart contract. For example, solutions may be submitted to an address (e.g. an account on the blockchain) that is associated with a smart contract and these solutions may only be considered valid if they indicate an algorithm used to determine the solution. Similarly, the block reward may be divvied out among the nodes of the blockchain based on inputs to the smart contract.

The use of a smart contract avoids future disagreements, since the terms of the contract are typically set before submissions to the contract. The outputs of the contract are then, typically, automatically determined.

Equally, these requirements could be enforced using offline contracts. For example, a node that wishes to use an optimisation may be required to obtain permission from the discoverer of that optimisation. Such permission may involve the signing of an agreement. The enforcement of this condition may then involve a judging node (e.g. associated with a legal judge) being able to penalise a node that does not abide by an agreement (e.g. by transferring an amount of a reward to an aggrieved party).

It will be understood that the present invention has been described above purely by way of example, and modifications of detail can be made within the scope of the invention.

Reference numerals appearing in the claims are by way of illustration only and shall have no limiting effect on the scope of the claims.

**Claims**

1. A blockchain (10) dependent on a plurality of proof of work problems.

2. A computer-implemented method of outputting a transmission to a second node (3004) of a blockchain (10), the method being performed by a first node of the blockchain (3002), the method comprising:

   identifying a first proof of work problem relating to the blockchain (10);
   identifying a second proof of work problem relating to the blockchain (10);
   identifying a solution, the solution relating to the first proof of work problem and/orthe second proof of work problem;
   determining, based on the solution:

   the influence of a further node (3006) on a consensus mechanism of the blockchain; and/or
   a reward for the further node (3006); and
   outputting a transmission to the second node (3004) of the blockchain (10) in dependence on the influence and/or the reward.

3. The method of any preceding claim, wherein identifying a solution comprises:

   determining a first factor relating to a computational power devoted by the further node (3006) to the first proof of work problem; and
   determining a second factor relating to a computational power devoted by the further node (3006) to the second proof of work problem.

4. The method of any claim 3, wherein the first factor and the second factor relate to different components of the influence and/or the reward, preferably wherein:

   the influence of the further node on a consensus mechanism of the blockchain is dependent on the first factor and the reward for the further node is dependent on the second factor;
   more preferably, wherein the influence of the further node on a consensus mechanism of the blockchain is not dependent on the second factor.

5. The method of claim 3 or 4, wherein the influence of and/or the reward for the further node (3006) is dependent on one or more of:

   a minimum factor;

an average of factors;
a distribution of factors;
a variance of factors; and
a parity between factor values, preferably wherein there is a penalty for exceeding a threshold disparity.

6. The method of any preceding claim, wherein the influence of the further node (3600) is dependent on at least one non-proof-of-work sybil-defence factor and/or wherein determining the influence of the further node (3006) comprises determining that the further node is a proposer, validator, and/or signer of a block of the blockchain (10).

7. The method of any preceding claim, wherein at least one of the proof of work problems comprises a progress-free and/or non-optimisable problem, preferably wherein the influence of the further node on the consensus mechanism is dependent on said proof of work problem.

8. The method of any preceding claim, wherein at least one of the proof of work problems comprises a non-progress-free and/or optimisable problem, preferably wherein the reward, but not the influence, of the further node on the consensus mechanism is dependent on said proof of work problem.

9. The method of any of claims 3 to 8, further comprising determining a threshold value relating to one or more of:

a maximum permitted value of the first factor and/or the second factor of the further node (3006);
a maximum permitted increase in the first factor and/or the second factor of the further node (3006) over a unit of time and/or over a number of blocks of the blockchain (10); and
a maximum permitted disparity between the first factor and the second factor of the further node (3006);
preferably, wherein the threshold value is dependent on one or more of:

a hardcoded value;
a popular vote by the nodes of the blockchain;
a computational cost associated with the first factor and/or the second factor;
a transaction recorded on the blockchain; and
an external input, preferably a bid from an external party.

10. The method of claim 9, wherein exceeding the threshold value is associated with a penalty, preferably wherein:

the penalty relates to a redistribution of an amount of the first factor and/or the second factor of the further node (3006) among the other nodes of the blockchain; and/or
wherein the penalty is dependent on one or more of:

a magnitude of a disparity between the first factor and the second factor, more preferably wherein the penalty increases with the magnitude, yet more preferably wherein the penalty increases exponentially and/or in a stepped manner;
a cost related to the node altering the first factor and/or the second factor; and
the factors of other nodes.

11. The method of any preceding claim, comprising determining a plurality of factors relating to the computational power devoted by the further node (3006) to a plurality of proof of work problems, wherein at least one of the influence and/or the reward is dependent on each of the proof of work problems; preferably:

determining at least twenty factors, more preferably at least fifty factors, yet more preferably at least one hundred factors; and/or
wherein at least one of the factors relates to a proof of work problem associated with a further blockchain (20).

12. The method of any preceding claim, further comprising identifying an algorithm used by the further node (3006) to determine the solution, preferably comprising determining a reward to be transferred from the further node (3006) to a yet further node of the blockchain (10) in dependence on the usage of the algorithm.

13. The method of any preceding claim, further comprising determining one or more puzzles to be allocated to the further node (3006) for the first problem and/or the second problem, preferably wherein the number of puzzles is dependent on a number of solutions previously submitted by the further node (3006) for said problem.

**14.** The method of any preceding claim, wherein outputting a transmission comprises one or more of:

adding a block to the blockchain (10);
transmitting a message to one or more nodes of the blockchain (10);
validating and/or signing a block of the blockchain (10); and
transmitting a block of the blockchain (10) to one or more nodes of the blockchain (10).

**15.** An apparatus arranged to store, access, and/or view the blockchain (10) of claim 1 and/or to perform the method of any of claims 2 to 14, preferably wherein the apparatus comprises one or more of:

a computer implemented device (1000);
a display and/or a speaker; and
a user input, more preferably wherein the apparatus is arranged to present information relating to the blockchain (10) in dependence on a user request and/or an event.

1/11

10

12

14

16

18

# Figure 1

Computer
device
2000

2014

CPU 2002

Communication
interface 2004

Memory 2006

Storage 2008

2016

User interface
2012

2018

2020

Removable
storage 2010

# Figure 2

3000

3006

3002

3004

Figure 3

100

Identify a solution to at least one of a plurality of proof of work problems — 101

Add a block to the blockchain based on the solution — 102

# Figure 4

110

Identify a first proof of work solution — 111

Identify a second proof of work solution — 112

Determine a parameter relating to the influence of a node on a consensus mechanism based on the first proof of work solution and the second proof of work solution — 113

# Figure 5

120

Identify a solution to a proof of work problem submitted by a first node — 121

Identify an optimisation used to obtain the solution — 122

Determine a reward for a second node that has discovered the optimisation — 123

# Figure 6

130

Identify a number of solutions provided by a first node for a proof of work problem — 130

Determine a number of puzzles to allocate to this first node based on the number of solutions — 131

# Figure 7

140

| Identify a solution to a proof of work problem | 141 |

| Identify a participant in the addition of a block to the blockchain based on the solution | 142 |

| Determine factors for the proof of work problems for one or more nodes | 143 |

| Determine parameters for the one or more nodes based on the factors | 144 |

| Determine a reward for the one or more nodes based on the parameters | 145 |

| Add a block to the blockchain | 146 |

# Figure 8a

150

| Determine factors for the proof of work problems for one or more nodes | 151 |
| Determine parameters for the one or more nodes based on the factors | 152 |
| Determine a participant in the addition of a block to the blockchain based on the parameters | 153 |
| Determine a reward for one or more nodes | 154 |
| Add a block to the blockchain | 155 |

# Figure 8b

Figure 9

Node i

|  | Problem #1<br>Progress-free | Problem #2<br>Non-progress-free<br>Parallelisable | Problem #3<br>Non-progress-free<br>Non-parallelisable |  |
|---|---|---|---|---|
|  | $a_1 = 70$ | $a_2 = 10$ | $a_3 = 40$ | (a) |
|  | $\bar{a}_1 = 0.7$ | $\bar{a}_2 = 0.1$ | $\bar{a}_3 = 0.4$ |  |
|  | $a_1 = 20$ | $a_2 = 60$ | $a_3 = 40$ | (b) |
|  | $\bar{a}_1 = 0.4$ | $\bar{a}_2 = 0.4$ | $\bar{a}_3 = 0.4$ |  |
|  | $a_1 = 40$ | $a_2 = 40$ | $a_3 = 40$ | (c) |
|  | $\bar{a}_1 = 0.4$ | $\bar{a}_2 = 0.4$ | $\bar{a}_3 = 0.4$ |  |

Figure 10

Europäisches
Patentamt

European
Patent Office

Office européen
des brevets

# EUROPEAN SEARCH REPORT

**Application Number**

EP 21 16 1346

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | 8bitcoder: "Myriad ¦ Multi-Algo, Fair, Secure", <br><br>, 22 June 2020 (2020-06-22), XP055795373, Retrieved from the Internet: URL:https://web.archive.org/web/2020062212 0427/https://bitcointalk.org/index.php?top ic=483515.0 [retrieved on 2021-04-14] * the whole document * | 1-15 | INV. H04L9/32 G06F21/64 G06Q20/38 |
| X | Cryptorekt: "Verge Currency Blackpaper", <br><br>, 1 January 2019 (2019-01-01), XP055795384, Retrieved from the Internet: URL:https://vergecurrency.com/static/black paper/verge-blackpaper-v5.0.pdf [retrieved on 2021-04-14] * page 4 * | 1-15 | |
| A | US 2020/013027 A1 (ZHU XIAOHAN [US]) 9 January 2020 (2020-01-09) * the whole document * | 1-15 | TECHNICAL FIELDS SEARCHED (IPC) |
| A | Anonymous: "Blockchain Technical Specifications - Bitmark - Cryptocurrency Blockchain - Marking: Digital Assets & Reputation", <br><br>, 22 January 2021 (2021-01-22), XP055795805, Retrieved from the Internet: URL:https://web.archive.org/web/2021012221 0802/https://www.bitmark.io/blockchain-tec h-specs/ [retrieved on 2021-04-15] * the whole document * | 1-15 | H04L G07G G06F G06Q |

The present search report has been drawn up for all claims

| Place of search | Date of completion of the search | Examiner |
|---|---|---|
| Munich | 18 August 2021 | Yamajako-Anzala, A |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 16 1346

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2021

| Patent document cited in search report | Publication date | Patent family member(s) | Publication date |
|---|---|---|---|
| US 2020013027 A1 | 09-01-2020 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BACK.** *AI Enabling Blockchain Innovations with Pegged Sidechain,* 2014, https://block-stream.com/sidechains.pdf
- **SATOSHI NAKAMOTO.** *Bitcoin: A peer-to-peer electronic cash system,* 2008, http://nakamotoinstitute.org/bitcoin
- **SILVIO MICALI.** Algorand: the efficient and democratic ledger. *CoRR,* 2016
- **NAKAMOTO, S.** *Bitcoin: A Peer-to-Peer Electronic Cash System,* 2008, https://bitcoin.org/bitcoin.pdf
- **CHEN, J.** *ALOGRAND,* 2017, https://arxiv.org/pdf/1607.01341.pdf
- The first collision for full sha-1. **MARC STEVENS ; ELIE BURSZTEIN ; PIERRE KARPMAN ; ANGE ALBERTINI ; YARIK MARKOV.** Annual International Cryptology Conference. Springer, 2017, 570-596
- **SATOSHI NAKAMOTO.** *Re: Dealing with sha-256 collisions,* 2010, https://bitcointalk.org/index.php?topic=191.msg1585msg1585
- **BOYEN et al.** *Blockchain-Free Cryptocurrencies: A Framework for Truly Decentralised Fast Transactions,* 2016, https://epri nt.iacr.org/2016/871.pdf
- **LOI LUU ; YARON VELNER ; JASON TEUTSCH ; PRATEEK SAXENA.** Smartpool: Practical decentralized pooled mining. *26th {USENIX} Security Symposium ({USENIX} Security 17),* 2017, 1409-1426
- **TEUTSCH ; REITWEIßNER.** *A scalable verification solution for blockchains,* 2014, https://people.cs.uchicago.edu/~teutsch/papers/truebit.pdf
- **BENTOV et al.** *Proof of Activity: Extending Bitcoin's Proof of Work via Proof of Stake,* 2014, https://eprint.iacr.org/2014/452.pdf
- **MUSTAFA AL-BASSAM ; ALBERTO SONNINO ; VITALIK BUTERIN.** Fraud proofs: Maximising light client security and scaling blockchains with dishonest majorities. *arXiv preprint arXiv:1809.09044,* 2018